(19) Europäisches Patentamt
European Patent Office
Office européen des brevets

(11) EP 1 034 209 B1

# (12) FASCICULE DE BREVET EUROPEEN

(45) Date de publication et mention de la délivrance du brevet:
**04.02.2004 Bulletin 2004/06**

(21) Numéro de dépôt: **98955675.8**

(22) Date de dépôt: **17.11.1998**

(51) Int Cl.[7]: **C08J 3/03**, C08L 83/04

(86) Numéro de dépôt international:
**PCT/FR1998/002449**

(87) Numéro de publication internationale:
**WO 1999/025757 (27.05.1999 Gazette 1999/21)**

## (54) DISPERSIONS SILICONES AQUEUSES, FORMULATIONS NOTAMMENT DE PEINTURES LES COMPRENANT ET L'UN DE LEUR PROCEDE DE PREPARATION

WÄSSRIGE SILIKONDISPERSIONEN, DIESE ENTHALTENDE ZUSAMMENSETZUNGEN, INSBESONDERE FARBEN, UND EIN HERSTELLUNGSVERFAHREN

AQUEOUS SILICON DISPERSIONS, FORMULATIONS IN PARTICULAR OF PAINTS CONTAINING THEM AND ONE METHOD FOR PREPARING THEM

(84) Etats contractants désignés:
**AT BE DE FR GB IT NL**

(30) Priorité: **18.11.1997 FR 9714681**

(43) Date de publication de la demande:
**13.09.2000 Bulletin 2000/37**

(73) Titulaire: **RHODIA CHIMIE**
**92408 Courbevoie Cédex (FR)**

(72) Inventeurs:
- **CARDINAUD, Denis**
  **F-69100 Villeurbanne (FR)**
- **CHARRUEY, Bruno**
  **F-91580 Etrechy (FR)**
- **STREET, Georges, Christopher**
  **F-69110 Sainte Foy-les-Lyon (FR)**
- **PAILLET, Jean-Pierre**
  **F-69320 Feyzin (FR)**

(56) Documents cités:
**EP-A- 0 572 006**
**EP-A- 0 738 747**
**WO-A-96/08529**
**FR-A- 2 753 708**
**US-A- 4 554 187**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 034 209 B1

## Description

Le domaine de la présente invention est celui des dispersions/émulsions siloxanes aqueuses, dans lesquelles une fraction silicone est durcissable par réticulation. Ces dispersions ont vocation à être utilisées comme ingrédients actifs dans des formulations de :

- peintures à l'eau, crépis, lazures, imprégnations, revêtements semi-épais (RSE).
- matériaux d'étanchéification aqueux : mastics, joints, colles ...
- matériaux de construction : bétons hautes performances, matériau de comblement & rebouchage....

Dans ces formulations, les dispersions siloxanes sont associés à des liants organiques conventionels.

Plus précisément, l'invention concerne une dispersion silicone aqueuse, contenant un ou plusieurs polyorganosiloxanes (POS) destinés à réticuler ou ayant réticulés par élimination d'eau ou d'alcool, selon le mécanisme de polycondensation intervenant, avantageusement, à température ambiante. Cette polycondensation fait intervenir des groupements silanols SiOH présents à l'origine sur les composés silicones et/ou issus de l'hydrolyse de groupements précurseurs Si-*alcoxy*. L'hydrolyse de ces précurseurs entraîne, outre la production d'OH, l'apparition de sous-produits alcooliques. Cette condensation peut aussi directement impliquer des groupements *Si-alcoxy*.

La présente invention concerne également un procédé parmi d'autres de préparation d'émulsion et de dispersion silicones aqueuses, notamment, du type de celles selon l'invention.

La demande du marché des producteurs de formulations du type de celles énumérées ci-dessus pour des produits écologiques, peu ou pas toxiques (notamment sans solvant organique volatil) et d'utilisation commode et aisé (lavage des outils e.g.), a suscité le développement de dispersions/émulsions aqueuses susceptibles de remplacer, avantageusement, les solutions et dispersions de liants polymères organiques et/ou de silicones dans des solvants ou composés organiques volatils (COV).

C'est ainsi que sont apparues des émulsions silicones aqueuses destinées à être utilisées comme matières premières dans la fabrication de peintures, de RSE ou de mastics et contenant une ou plusieurs huiles silicones réticulables en élastomères par condensation. De telles émulsions ont vocation à se substituer en tout ou partie aux liants polymères organiques jusqu'alors classiquement employés, notamment dans les peintures.

Les difficultés techniques rencontrées dans l'élaboration de ces émulsions silicones aqueuses sont nombreuses. On peut en distinguer une première catégorie commune à toutes les applications finales visées et une seconde catégorie plus spécifique aux peintures et RSE.

S'agissant de la première catégorie, il convient de citer en premier lieu la stabilité au stockage de ces émulsions huile dans eau (H/E). Il est clair qu'un déphasage indésirable de l'émulsion silicone aqueuse est totalement rédhibitoire dans les applications.

Il convient également de porter une grande attention aux problèmes de sécurité et de toxicité. En effet, même si ceux-ci sont relativement atténués du fait de l'emploi d'eau comme milieu de dispersion, il n'en demeure pas moins que des produits nocifs peuvent être générés in situ par hydrolyse (COV).

Par ailleurs, le temps de durcissement des silicones de l'émulsion ne doit pas être trop long après application. En outre, le réticulat ou l'élastomère qui se forme doit être doué de propriétés mécaniques convenables (dureté, élasticité, résistance à l'abrasion) adaptées à l'application concernée.

Il va également de soi que l'émulsion silicone aqueuse ou les produits préparés à partir de celle-ci, se doivent d'être d'utilisation aisée.

Enfin, il importe que, quelque soit l'utilisation visée, le matériau obtenu après application (film, revêtement, joint, comblement) adhère parfaitement au support sur lequel il est appliqué.

En ce qui concerne la deuxième catégorie de difficultés propres aux peintures et aux RSE. il faut insister sur le fait que la stabilité des émulsions de peinture est encore plus cruciale.

En outre, une peinture se doit d'être facilement applicable sous forme de film par les moyens connus : pinceau, rouleau, projection, immersion...

Il est également essentiel que les peintures ou plus exactement les émulsions silicones aqueuses qui rentrent dans leur formulation, possèdent un pouvoir liant le plus élevé possible. Cette propriété est capitale, car elle détermine la cohésion du film de peinture qui comprend le silicone réticulé (élastomère) et qui est appliqué sur un support. Cela conditionne également les propriétés mécaniques du film de peinture. en termes de dureté et de résistance à l'abrasion notamment. On s'intéresse ainsi plus particuliérement à la résistance à l'abrasion humide (RAH) car il est important pour la satisfaction des consommateurs finaux, qu'une fois appliquées, les peintures soient lavables et/ou lessivables à l'eau.

Il est de plus capital pour les peintures que les liants polymères qu'elles contiennent, en particulier les silicones, réticulent correctement de manière à produire un film d'élastomère dur. En d'autres termes, ce film ne doit pas être poisseux, de manière à éviter que des salissures se collent dessus. Le durcissement imparfait du film de peinture a également pour répercussion néfaste de diminuer sa durabilité et sa résistance aux agressions extérieures climatiques ou biologiques.
Il est également demandé aux peintures d'être imperméables à l'eau provenant de l'extérieur et perméables à la vapeur d'eau d'origine interne.
En résumé, les spécifications demandées aux peintures à base d'émulsions silicones aqueuses, sont :

- caractère écologique (sécurité, non toxicité),
- fort pouvoir liant et forte cohésion (RAH élevé),
- dureté synonyme de durabilité et d'aspect propre et non poisseux
- perméabilité à la vapeur d'eau
- caractère hydrofuge.

Diverses propositions de l'art antérieur ont tenté de satisfaire, en vain, au cahier des charges ci-dessus défini.
La demande de brevet allemand **N° 3 019 655** décrit une émulsion silicone qui, après élimination d'eau, peut être convertie en un élastomère dans des conditions ambiantes. Cette émulsion silicone comprend également de la silice amorphe introduite sous forme de dispersion colloïdale. De telles dispersions de silice ne sont pas particulièrement stables. Le pH du mélange est un paramètre critique au regard de la stabilité. Il est donc très délicat à fixer. Par ailleurs, l'incorporation de silice est à l'origine d'une certaine inhomogénéité de dureté de l'élastomère réticulé obtenable. Ceci est dû au fait que la silice a, en effet, tendance à réagir de façon parasite avec les extrémités OH réactives de l'huile silicone.
Dans d'autres propositions antérieures, la charge siliceuse est du silicate de sodium (**US N° 4 244 849**) ou de la silice amorphe en poudre (**FR N° 2 463 163**).
Ces trois derniers brevets enseignent que pour obtenir une émulsion monocomposante stable au stockage, il faut fixer son pH à des valeurs supérieures ou égales à 8,5 ou 9, de préférence à 10. Les émulsions selon ces brevets ne répondent pas aux attentes du domaine technique, en matière de stabilité. de propriétés mécaniques de pouvoir liant, de cohésion, de dureté et d'adhérence sur support.
Le brevet américain **N° 4 554 187** propose une émulsion silicone convertible en un élastomère dans des conditions ambiantes, par élimination d'eau et d'alcool et comprenant :

- un polydiorganosiloxane à extrémités hydroxyles et prépondérant dans la phase non-aqueuse ;
- une résine silicone alcoxy ou acyloxy fonctionnelle réactive, utile comme agent de réticulation et donc à ce titre présent en quantité minime dans la phase non aqueuse ;
- un catalyseur du type sels d'étain ;
- des charges thixotropiques de nature siliceuse ou non ;
- et des charges non thixotropiques telles que $Ca(OH)_2$.

La résine silicone réticulante acyloxy- ou alcoxyfonctionnelle peut être une résine méthylsilicone non aminée, de formule $CH_3$ Si $(O)_{1,1}$ $(OCH_3)_{0,8}$. Cette résine non hydrosoluble est introduite sous forme d'émulsion. Elle ne satisfait pas au cahier des charges défini supra.
La demande de brevet européen **N° 0 572 006** divulgue des dispersions aqueuses de POS stables au stockage, prêtes à l'emploi et comprenant :

- o un polydiorganosiloxane (A) majoritaire pourvu de groupements condensables (OR-OH), tel que l'$\alpha,\omega$-diOH-polydiméthylsiloxane (PDMS) ;
- o un catalyseur (B) de condensation du type sel d'étain ;
- o une quantité mineure [inférieure à 15 % poids par rapport au POS (A)] d'une résine POS (C) à motifs siloxyles DT, MT ou MQ et de poids moléculaire PM $\leq$ 20 000 g/M (les substituants alkyles des motifs MDT étant des méthyles) ;
- o un promoteur d'adhérence (D) comportant un ou plusieurs restes azotés basiques ;
- o et de l'alcool polyvinylique (E).

Ces dispersions peuvent notamment être employées dans la formulation de peintures. La formule du promoteur d'adhérence azoté (D) est très générale et couvre une multitude de composés. Cette demande de brevet enseigne l'utilisation de manière privilégiée de promoteur (D) du type N-(2-aminoéthyl)-3-amino-propylméthylsilanolate de potassium ou bien encore de PDMS fonctionnalisé par des motifs 3-(2-aminoéthylamino)propyle. Ces promoteurs d'adhérence (D) recommandés ne sont pas hydroxylés.
Enfin, les dispersions aqueuses et les élastomères selon cette demande européenne antérieure ne satisfont pas correctement au cahier des charges susvisé notamment, en ce qui concerne le fort pouvoir liant requis pour augmenter la cohésion et la RAH.

La demande de brevet européen **N° 0 655 475** est dans la même veine que **l'EP N° 0 572 006** visé supra et concerne une dispersion aqueuse réalisée à base d'une émulsion comprenant :

- ♦ une quantité essentielle d'huile silicone condensable du type PDMS $\alpha,\omega$-diOH (A) ;
- ♦ une quantité mineure de résines POS (B) alcoxylées voire acétoxylées ou oximées et de PM inférieur à 20 000 g/M ;
- ♦ et d'un composé aminé ( C ), e.g. : silanolate de potassium du type N-(2-aminoéthyl)-3-aminopropylsilanolate de potassium ou bien encore PDMS N-(2 aminoéthyl)-3-aminopropytméthyl substitué ;

cette dispersion étant caractérisée en ce qu'elle ne contient aucun catalyseur organométallique.
Les composés (A),(B) et (C) **l'EP N° 0 655 475** correspondent respectivement aux composés (A) (C), (D) de **l'EP N° 0 572 006.**
L'emploi de résines alcoxylées voire acétoxylées ou oximées, a pour conséquence de générer des COV indésirables lors de la réticulation.
La demande de brevet français **N° 94 11 410** concerne une dispersion silicone aqueuse, réticulable en un élastomère adhérent, selon un mécanisme réactionnel de condensation. Cette dispersion comprend :

- Δ un POS (A) du type PDMS $\alpha,\omega$-diOH,
- Δ un tensioactif (B),
- Δ un composé aminé silicié ( C ) présent en faible quantité [inférieure à 5 % par rapport au POS (A)] formé de plusieurs unités récurrentes alcoxylées de formule : $R^1{}_x\ R^2{}_y\ (OR^3)_z\ SiO_{4-(x+y+z)/2}$, avec z compris entre 0,2 et 2 ; $R^1$, $R^3$ = méthyle et $R^2$ = reste azoté ;
- Δ éventuellement moins de 5 % en poids dans la phase non aqueuse par rapport au POS (A) - d'au moins une résine silicone hydroxylée et/ou alcoxylée (D) ;
- Δ et/ou éventuellement au moins un alcoxysilane (E) ;
- Δ et/ou éventuellement au moins un catalyseur de condensation (F), et/ou éventuellement au moins une charge (G) siliceuse ou non.

Le composé aminé et silicié ( C ) est une résine de fonctionnalité moyenne en silicium supérieure à 2 et susceptible d'être salifiée à un pH acide. Une telle résine n'est donc hydrodispersable ou hydrosoluble qu'à un pH acide. Une telle limitation au niveau de l'hydrosolubilité est contraignante. En outre, la stabilité de cette émulsion. bien que satisfaisante, reste néanmoins perfectible. Enfin, cette résine (C) n'est pas hydroxylée.
La demande de brevet français **N° 96 11 971** non encore publiée, est relative elle-aussi à une dispersion silicone aqueuse, réticulable en un élastomère adhérent, par condensation. Cette dispersion contient les mêmes ingrédients (A à G) que celle selon la demande FR **N° 94 11 410**, à la différence près que le composé aminé silicié (C) est hydroxylé, contrairement au composé (C) selon la demande **N° 94 11 410.** En outre, le composé aminé et silicié (C) selon la demande **N° 96 11 971** est choisi de telle sorte qu'il permette une hydrodispersabilité ou une hydrosolubilité à tout pH.
De toute façon, étant donné la présence majoritaire à titre de silicone, d'un PDMS linéaire à motif D, cette dispersion silicone aqueuse n'est nullement en mesure de répondre au cahier des charges fixé en préambule.
On connaît également par le brevet **US N° 4 277 382** une émulsion silicone aqueuse stable à l'état non réticulé, de sorte qu'elle peut être appliquée sur des fibres de verre pour les enrober dans un revêtement, qui se forme après réticulation du silicone de l'émulsion, par chauffage à 300°C. Selon ce brevet. la stabilité de l'émulsion revendiquée est de trois mois à température ambiante.
Cette émulsion est obtenue en préparant séparément deux préémulsions A et B. La préémulsion A est une émulsion de catalyseur contenant du dilaurate de dibutylétain comme catalyseur de condensation, un silicone de type polycarbinol à titre de tensioactif, et une faible quantité de silane de réticulation du type méthyltriméthoxysilane. La préémulsion B comporte le constituant majeur de l'émulsion finale, à savoir un polydiméthylsiloxane $\alpha,\omega$-diOH (POS linéaire à motifs D). Cette préémulsion B contient en outre moins de 15 % en poids par rapport au PDMS, d'un silane de réticulation du type vinyltriméthoxysilane, ainsi qu'un tensioactif. Les préémulsions A et B sont mélangées l'une à l'autre avec un complément formé par un antimousse. Il n'est nullement question d'application peinture dans ce brevet.
A l'issue de cette revue de l'état de la technique. force est de constater la carence existant en une dispersion siloxane aqueuse :

- → susceptible d'être utilisée dans des formulations de peintures, de RSE ou analogues voire de mastic ou de matériau d'étanchéification ou de construction,
- → et apte à réticuler correctement et suffisamment par condensation, en un élastomère ou un réticulat, qui confère à l'application finale (e.g. peinture) :

- un fort pouvoir de liant
- une excellente cohésion
- une RAH élevée
- un état de surface propre et sec
- une bonne durabilité
- des caractéristiques de sécurité de non toxicité convenables
- une imperméabilité à l'eau et une perméabilité à la vapeur d'eau satisfaisantes
- une aptitude à être appliqué en film mince,
- une facilité d'utilisation comprenant notamment - la possibilité de nettoyage à l'eau - des outils ayant servis à la préparation et à l'emploi de la dispersion ou de la peinture
- une stabilité au stockage élevée et pérène - supérieure à 3 mois - (maintien de la teneur en COV ou en alcools produits in situ inférieur à un seuil de rupture de la dispersion)
- et un important pouvoir d'adhérence sur support pour les films obtenus à partir de cette dispersion ou des produits finaux qui font entrer cette émulsion dans leur constitution.

L'un des objectifs essentiel de la présente invention est donc de proposer une dispersion silicone aqueuse satisfaisant, séparément et collectivement, à toutes les spécifications énumérées ci-dessus.
Un. autre objectif essentiel de la présente invention est de fournir une dispersion silicone aqueuse de base, qui puisse être transformée par addition d'ingrédients adaptés, en une formulation aqueuse contenant éventuellement au moins une émulsion: aqueuse de liants polymères organiques, et ayant vocation à former une peinture écologique, à forte cohésion, à fort pouvoir liant, à RAH élevé et n'ayant pas de tendance, une fois appliquée aisément, à devenir poisseuse et sale.
Un autre objectif essentiel de la présente invention est de fournir une formulation de peinture, de RSE ou d'analogues, de mastic ou de tout autre matériau d'étanchéification ou de construction comprenant la dispersion aqueuse sus-visée.
Un autre objectif essentiel de la présente invention est de fournir un procédé de préparation de la susdite dispersion aqueuse.
Ces objectifs et d'autres sont atteints par la présente invention, qui procède de la mise en évidence, après de longues études et expérimentations et de manière tout à fait surprenante et inattendue,
de la possibilité d'améliorer les caractéristiques mécaniques de dureté et de résistance à l'abrasion des silicones contenus dans les émulsions. en sélectionnant à titre de constituants essentiels de la phase non-aqueuse, une classe particulière de résines siloxanes principalement formées de motifs T et en choisissant le reste de la composition de telle sorte que se produise une réticulation et une forte augmentation du poids moléculaire de cette résine, à l'intérieur des goutelettes de phase siloxane dispersée. Cela permet d'obtenir une dispersion aqueuse de silicone réticulé.
D'où il s'ensuit que la présente invention concerne une dispersion silicone aqueuse, utilisable notamment dans la formulation de peintures, caractérisée:

◊ en ce que les gouttelettes de phase non-aqueuse de cette dispersion sont obtenues à partir d'au moins une résine **A** polyorganosiloxanique (POS) liquide ayant pour particularités, avant émulsification :

→ d'être porteuse de substituants hydroxyles condensables et présents à hauteur d'au moins 0,05 % en poids ;
→ et de comporter des motifs siloxyles D, T et éventuellement M et/ou Q, les motifs siloxyles T étant présents dans un ratio molaire $\frac{T}{M + D + T + Q}$ compris entre 0,5 et 0,85, de préférence entre 0,55 et 0,80 ;

◊ et en ce que la composition de sa phase non-aqueuse est la suivante :

□ parties en poids □

□ 100 □ **A** - une ou plusieurs résines POS liquide(s) du type de celle définie ci-dessus et éventuellement substituée par au moins une fonction d'activation **Fa** de la réticulation in situ de la résine A;
□ 0 à 20 □ **B** - au moins un activateur de la réticulation in situ de la résine A, cet activateur étant basique, hydrosoluble, et choisi - de préférence - :

Δ parmi les amines hydrosolubles ou hydrodispersables
Δ et/ou parmi les produits obtenus à partir de silanes et/ou les oligo ou polysiloxanes porteurs, par molécule et avant émulsification, d'au moins un hydroxyle et d'au moins une fonction d'activation **Fa**,
Δ ainsi que parmi les mélanges de ces produits,
*avec la condition selon laquelle* la composition est exempte d'activateur **B** si et seulement

si les fonctions **Fa** portées par d'autres composants de la composition, en particulier celles portées par A et/ou par **D**, sont présentes en quantité suffisante ;

- □ > 0 □ **C** - au moins un catalyseur de condensation sélectionné, de préférence, parmi les composés organométalliques, et plus préférentiellement encore parmi les dicarboxylates de dialkylétain ;
- □ 0 à 30 □ **D** - au moins un coréticulant, de préférence sélectionné parmi les produits obtenus à partir de silanes et/ou de siloxanes initialement porteurs d'au moins deux fonctions $-OR^d$ ($R^d$ = H ou radical hydrocarboné aliphatique de préférence en $C_1$-$C_{20}$), par molécule. Ce coréticulant étant éventuellement substitué par au moins une fonction d'activation Fa par molécule ;
- □ 0 à 30 □ **E** - au moins un tensioactif.

Le problème de l'amélioration des caractéristiques mécaniques et rhéologiques des POS contenus dans ce genre d'émulsions, a été résolu par les inventeurs, qui ont eu le grand mérite de comprendre que la solution passait par une augmentation de la dureté du POS réticulé et donc par l'acroissement de la densité de réticulation. Une fois cette réflexion faite, les inventeurs se sont trouvés confrontés à la difficulté consistant à augmenter le poids moléculaire de l'élastomère réticulé (ou autrement dit le taux de réticulation), sans compromettre l'aptitude requise pour le POS d'être aisément émulsifiable. Cela suppose que le silicone soit suffisamment liquide. Les inventeurs ont surmonté cette difficulté en élaborant une composition pour la dispersion qui se distingue par la présence prépondérante d'une résine POS essentiellement constituée de motifs siloxyles DT et qui est par ailleurs hydroxylée. Un autre élément important dans cette composition serait le catalyseur de condensation C, apte à pénétrer dans les gouttelettes de phase silicone dispersée, facile à obtenir grâce au caractère liquide de la résine A.

Selon l'invention, il est préférable de prévoir un activateur **B**, pour favoriser ce phénomène inattendu, qu'est la réticulation in situ de la résine **A** à motifs DT, dans les gouttelettes stables.

La présence du coréticulant **D** est souhaitable, surtout dans les cas où la résine A ne présente pas suffisamment de fonctions condensables OH et/ou de fonctions alcoxy transformables en OH par hydrolyse. En effet, **D** peut se condenser avec A par l'intermédiaire de leurs fonctions silanols ou alcoxysilyles respectives. Les fonctions $OR^d$ avec $R^d$ = H de **D** peuvent être celles existant à l'origine sur **D** ou celles provenant de l'hydrolyse de fonctions $-OR^d$ avec $R^d$ = groupement hydrocarboné, de préférence en $C_1$-$C_{20}$.

Contre toute attente, il apparaît que cette dispersion est stable durablement et qu'elle satisfait aux objectifs assignés d'amélioration du pouvoir liant et de la RAH, de facilité de préparation et d'utilisation, de barrière sélective aux échanges d'eau forme liquide ou forme vapeur, et de sécurité/non toxicité.
En outre, il est particulièrement surprenant de constater qu'après mûrissement /réticulation du POS (**A**) en POS (**A'**), la dispersion est toujours filmogène. En effet, nonobstant leur état réticulé et leur masse moléculaire augmentée, on observe à la mise sous forme de film, que les gouttelettes de résine (A) coalescent et que la dispersion sèche.

La réticulation en émulsion - caractéristique de l'invention - permet d'accroître, in situ, le poids moléculaire moyen de la résine **A** et sa viscosité. Avant sa réticulation, la résine **A** hydroxylée présente un poids moléculaire moyen en poids Mw suffisamment bas et donc, de fait, une viscosité suffisamment basse, pour pouvoir être émulsifiée. Il n'est pas nécessaire de prédiluer cette résine dans un solvant pour pouvoir la mettre en émulsion selon les procédures classiques.
En conséquence, cette dispersion selon l'invention comprend, après réticulation, un réticulat ou un élastomère silicone doué de propriétés mécaniques, (notamment de résistance à l'abrasion), améliorées, sans utiliser de solvants toxiques et dangereux.

Selon un mode préféré de réalisation de l'invention, la proportion d'activateur B est supérieure à 0. Cet activateur basique hydrosoluble ou hydrodispersable semble agir, en effet, comme un cocatalyseur de condensation, dont la présence est souhaitable pour certains types de résines POS A, associées ou non à un coréticulant D.

Suivant une caractéristique avantageuse de l'invention, la dispersion a une teneur en **C**omposés **O**rganiques **V**olatils (COV) inférieure ou égale à 15 %, de préférence à 10 % et, plus préférentiellement encore à 5 % ; ces % étant des % en poids par rapport à la phase non-aqueuse de l'émulsion.
Ces COV peuvent éventuellement provenir de l'hydrolyse et/ou de la condensation de Substituants organo fonctionnels hydrolysables (**Sofh**) du type alcoxy, dont peut être . porteur la résine **A** et/ou l'activateur **B** et/ou le coréticulant **D**.
Il est important de veiller à ce que cette teneur en COV et, en particulier, en alcool hydrosoluble issu de l'hydrolyse de groupements alcoxy, reste dans les limites sus-indiquées. En effet, un excès d'alcool serait susceptible de provoquer la rupture de l'émulsion.
Ainsi, selon une disposition préférée de l'invention, les constituants de la dispersion et en particulier les constituants **A, B** et **D** sont exempts de groupements $Si-OR^a$, $SiOR^b$. $SiOR^d$ respectivement, dans lesquels $R^a$, $R^b$, $R^d$ = radical hydrocarboné, de sorte que la dispersion présente une teneur nulle ou sensiblement nulle en COV.

Les constituants **A, B, D** de la dispersion sont définis dans le présent exposé au travers de leur structure

chimique *initiale*, c'est-à-dire celle qui les caractérisent *avant émulsification*. En effet, dès lors qu'ils sont milieu aqueux, ils se transforment par hydrolyse/condensation et leur structure devient alors difficilement définissable.

Le constituant essentiel de la dispersion sur le plan pondéral est la résine POS A. Les groupements hydroxyles de cette résine sont préférentiellement portés par les motifs T, mais une. substitution hydroxyle des motifs M et/ou D et/ou éventuellement Q, n'est pas à exclure.

Le taux d'hydroxylation est exprimé en % en poids. Selon ce mode d'expression, l'hydroxylation minimale est, de préférence, égale à 0,05 %. En pratique, il est supérieur ou égal à 0,3 % et plus préférentiellement encore compris entre 0,5 % et 3 %.

En tout état de cause, il convient que ce taux d'hydroxylation soit suffisant pour garantir une réticulation correcte et conforme au niveau attendu. Pour pallier une éventuelle carence en groupements hydroxyles, il est prévu conformément à l'invention, au moins un coréticulant **D** porteur de groupements de réticulation OH ou de groupements $OR^d$ précurseurs des OH.

Si l'on adopte un autre mode d'expression du taux d'hydroxylation en nombre d'OH par molécule, il convient alors d'indiquer que l'aptitude à la réticulation sera acquise, si et seulement si, au moins l'un des constituants (**A**), (**B**) ou (**D**) possède au moins 3 OH en moyenne par molécule.

Outre la substitution hydroxyle, la résine POS (**A**) peut comprendre des groupements alcoxyles ou acyloxyles de formule - $OR^a$ dans lesquelles $R^a$ = groupement hydrocarboné de préférence en $C_1$-$C_{20}$, et plus préférentiellement encore en $C_1$-$C_{10}$. Comme indiqué ci-dessus, il est préférable que la concentration en groupements $OR^a$ soit limitée, de façon à ne pas dépasser le seuil de tolérance en alcool, au regard de la stabilité de l'émulsion.

De préférence, la dispersion selon l'invention possède les caractéristiques qualitatives suivantes, prises chacune indépendamment l'une de l'autre ou en combinaison entre elles :

- Δ la résine (A) est liquide à l'atmosphère ambiante, cet état se traduisant par une viscosité $\eta_r$ à 25° C comprise entre 50 et 200 000 mPa.s, de préférence entre 200 et 20000 mPa.s ;
- Δ cette résine (A) est en outre sélectionnée parmi celles du type $T(OR^a)$, $DT(OR^a)$, $MDQ(OR^a)$, $MT(OR^a)$, $MQ(OR^a)$, $MDT(OR^a)$ ou les mélanges de celles-ci, les résines $DT(OR^a)$ et/ou $MDT(OR^a)$ étant particulièrement préférées, le radical $R^a$ étant tel que défini ci-dessus.

Toutes les viscosités dont il est question dans le présent exposé correspondent à une grandeur de viscosité dynamique à 25° C dite "Newtonienne", c'est-à-dire la viscosité dynamique qui est mesurée, de manière connue en soi, à un gradient de vitesse de cisaillement suffisament faible pour que la viscosité mesurée soit indépendante du gradient de vitesse.

Selon une variante de réalisation de dispersion selon l'invention, il est envisageable que la résine POS (**A**) soit elle-même porteuse d'au moins une fonction d'activation **Fa** comprenant - de préférence un groupement amine hydrosoluble-. Ces fonctions d'activation **Fa** pourraient être greffées sur la résine POS (**A**) par toute réaction de substitution ou d'addition convenable, par exemple, par condensation ou par hydrosilylation d'un réactif à insaturation éthylénique porteur d'au moins une fonction **Fa**.

L'obtention de telles résines POS (**A**) greffées **Fa** est parfaitement à la portée de l'homme du métier de la chimie des silicones.

Dans un tel cas de figure, il est clair que la présence de l'activateur (B) devient facultative.

De préférence, les fonctions **Fa** sont identiques ou différentes entre elles et choisies dans le groupe comprenant les fonctions aminés, amides, époxydes ou urées.

De manière plus préférée encore, **Fa** est un groupement aminoalkyle, non salifié, de formule générale :

$$-R^3-NR^4H$$

ou

$$-R^3-NH-R^5-NR^4H$$

dans laquelle:

$R^3$ et $R^5$ = reste hydrocarboné (par exemple $-(CH_2)_n-$ avec n = 1 à 10 )
$R^4$ = H ou $-C_nH_{(n-1)}$

L'amine peut ainsi être primaire ou secondaire.
Selon des variantes, elle peut être incluse dans un cycle ou être incluse dans des groupements isocyanurates ou HALS (type pipéridine ou autre).
Au sens de l'invention, les groupements HALS peuvent être définis comme une chaîne hydrocarbonée cyclique (HALS) de formule :

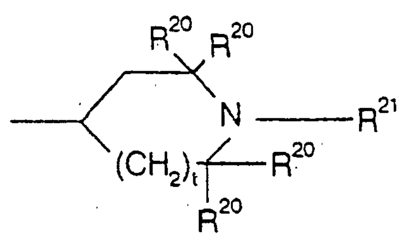

dans laquelle :

- ☐ les radicaux $R^{20}$, identiques ou différents entre eux, sont choisis parmi les radicaux alkyles, linéaires ou ramifiés, ayant de 1 à 3 atomes de carbone, phényle et benzyle,
- ☐ $R^{21}$ est choisi parmi un atome d'hydrogène, les radicaux alkyles linéaires ou ramifiés, ayant de 1 à 12 atomes de carbone ;
- ☐ t est un nombre choisi parmi 0 et 1 ;
- ☐ les radicaux $R^{20}$ préférés étant des méthyles et le radical $R^{21}$ étant un hydrogène ou un radical méthyle et étant avantageusement un nombre égal à 1.

S'agissant de l'activateur (**B**), il est avantageux, conformément à l'invention, de le sélectionner parmi les classes de produits énumérées ci-après :

- l'ammoniaque et/ou les amines hydrosolubles, de préférence les amines primaires ou secondaires ;
- et/ou les silanes hydroxylés ou alcoxylés ;
- et/ou les polydiorganosiloxanes hydroxylés ou alcoxylés, linéaires à motifs siloxyles D et/ou MD ;
- et/ou les résines POS hydroxylée ou alcoxylées et comprenant des motifs siloxyles T et éventuellement M et/ou D et/ou Q ou bien encore des motifs Q et M et/ou D et/ou T.

Les activateurs **B** comprenant du silicium sont tous porteurs d'au moins une fonction d'activation **Fa**. Cette dernière est liée directement ou non à un atome de silicium.
Il est à noter que le caractère hydrosoluble de l'activateur (B) de la dispersion selon l'invention, est un facteur important. Cela lui permet d'assurer plus efficacement sa fonction d'activation et de co-catalyseur de condensation, étant donné qu'il est ainsi particulièrement bien dispersé et sôlubilisé dans. la phase continue aqueuse de l'émulsion. Sans vouloir être lié par la théorie, on peut avancer l'explication selon laquelle cette forme solubilisée de l'activateur (**B**) aurait pour incidence de faciliter la diffusion du catalyseur (**C**) à l'intérieur des gouttelettes de phase silicone, au sein desquelles intervient la réticulation.
Dans le cas où l'activateur (**B**) test du type silane et/ou siloxane, le caractère hydrophile des hydroxyles présents sur ces produits, leur confère l'hydrosolubilité souhaitable.
Dans le cas où l'activateur B est de manière plus générale une amine, il est avantageux que celle-ci soit hydrosoluble donc salifiable. Cela correspond aux propriétés des amines primaires ou secondaires.
Au sens de la présente invention, on doit entendre par hydrosolubilité, l'aptitude d'un produit à se dissoudre dans l'eau à une température de 25 ° C, à hauteur d'au moins 5 % en poids.
Les silanes **Fa**-substitués, utilisables à titre d'activateur (**B**) peuvent être ceux obtenus e.g. à partir de mono**Fa**-trialcoxymonosilanes, tels que le : $NH_2\ (CH_2)_3\text{-}Si(OR)^b{}_3$ ; $R^b$ étant tel que défini ci-dessus. En milieu aqueux, ces silanes ont une tendance certaine à s'hydrolyser et à réagir par condensation OH/OH pour former des résines POS à motifs **T** de type de celles qui sont décrites ci-après.
Les γ-aminopropyltrialcoxysilanes ou leurs hydrolysats sont des activateurs préférés conformément à l'invention.
L'activateur hydrosoluble **B** peut également être un polydiorganosiloxane hydroxylé ou alcoxylée linéaire à motifs siloxyles D et/ou MD et/ou une résine POS hydroxylée ou alcoxylé comprenant des motifs siloxyles T et éventuellement M et/ou D et/ou Q ou bien encore des motifs siloxyles Q et M et/ou D et/ou T.
Les motifs siloxyles qui constituent ces silanes et/ou siloxanes susceptibles de former l'activateur **B** comportent. outre

des groupements $OR^b$, des substituants hydrocarbonés correspondant par exemple à un radical alkyle (e.g. méthyle, éthyle, isopropyle, tertiobutyle et n-hexyle), alcényle (e.g. vinyle, allyle) ou bien encore à une fonction **Fa**.
A titre d'exemple de POS hydroxylé linéaire, utilisable comme activateur (**B**), on peut citer les huiles silicones aminées de structure : $-(Si\ Me_2O)_a\ (SiMeFaO)_b-$ avec $b/a+b \leq 0{,}01$ et $a \leq 300$.

Le cas où l'activateur (**B**) est une résine POS hydroxylée hydrosoluble est l'un des préférés selon l'invention. Les résines plus particulièrement sélectionnées sont celles du type $T(OR^b)$, $DT(OR^b)$, $DQ(OR^b)$, $DT(OR^b)$, $MQ(OR^b)$, $MDT(OR^b)$ $MDQ(OR^b)$ ou les mélanges de celles-ci ; avec $R^b$ = H ou groupement hydrocarboné de préférence en $C_1$-$C_{20}$.
Ces résines sont des produits de condensation (mono ou polycondensation-hétéro ou homo condensation) de monomères, d'oligomères ou de polymères POS porteurs de groupements condensables, de préférence de nature hydroxylique.
On couvre ainsi par l'invention un premier genre d'activateur (**B**) utilisable en pratique. Il s'agit d'une résine silicone hydrosoluble et hydroxylée, obtenue :

→ par co-hydrolyse :

- d'au moins un silane ($S_1$) substitué par des **Fa** et par des substituants organofonctionnels hydrolysables (**Sofh**) identiques ou différents entre eux. de préférence des $-OR^b$ avec $R^b$ = radical hydrocarboné, avantageusement alkyle ;
- avec au moins un silane ($S_2$) substitué par des **Sofh** identiques ou différents entre eux et par rapport à ceux de ($S_1$), à l'exclusion de substituants **Fa** ;

→ par hétérocondensation des hydrolysats dérivant des silanes $S_1$ et $S_2$,
→ puis par « stripping » ou entrainement à la vapeur des hydrolysats dérivant des **Sofh**.

Dans la mesure où les **Sofh** les plus courants sont des alcoxyles $-OR^b$, les mécanismes d'hétérocondensation intervenant sont du type OH/OH et $OH/OR^b$, ces OH ou ORb étant portés par les hydrolysats dérivant des silanes $S_1$, $S_2$. Les hydrolysats dérivant des **Sofh** sont quant à eux des alcools, dans ce cas de figure.
Ainsi en pratique, le silane $S_1$ est avantageusement un trialcoxysilane, de préférence un triméthoxysilane, un triéthoxysilane, un méthyldiméthoxysilane ou un méthyldiéthoxysilane, porteur d'une fonction **Fa** aminée du type :

- aminopropyle$(H_2N)(CH_2)-_3$
- N-méthyl-3-aminopropyle $(H_3CNH)(CH_2)-_3$
- N-aminoéthyl-3-aminopropyle $(H_2N)(CH_2)_2NH(CH_2)-_3$
- $C_6H_5CH_2NH(CH_2)_2\ (NH)(CH_2)-_3$
- 3-uréidopropyle : $(H_2N\ CO\ NH)(CH_2)-_3$
- 3-4,5-dihydroimidazole-1-yl-propyle ;

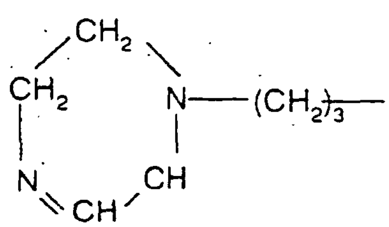

- 3-glycidyloxypropyl :

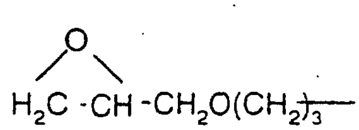
,

(les autres substituants des Si de l'activateur (**B**) étant exempts de **Sofh**).

S'agissant de $S_2$, les **Sofh** qu'il comprend, sont de préférence des radicaux alcoxyles, avantageusement en $C_1$-$C_6$, par exemple : méthoxy, éthoxy ou propoxy.
Ce silane $S_2$, de préférence un alcoxysilane, peut également comporter au moins un substituant alkyle, avantageusement en $C_1$-$C_6$, par exemple : méthyle, éthyle, propyle. Ces résines produites par hétérocondensation de $S_1$ et $S_2$ sont décrites, notamment. dans la demande de brevet européen **N° 0 675 128,** dont le contenu est intégré par référence dans le présent exposé.
Le deuxième genre d'activateur (**B**), utilisable en pratique est une résine obtenue :

→ par hydrolyse d'un silane $S_3$ substitué par des **Fa** et des **Sofh,**
→ par homocondensation des silanes $S_3$ hydrolysés,
→ et par « stripping » entrainement à la vapeur des hydrolysats dérivant des **Sofh.**

Le silane $S_3$ est, de préférence, un alcoxysilane **Fa**-substitué. Il peut s'agir, par exemple, d'un trialcoxysilane permettant d'obtenir une résine T (OH).
Ce silane $S_3$ peut être du même type que le silane $S_1$ tel que défini supra.
Les fonctions **Fa** substituant $S_3$ répondent à la même définition que celle donnée ci-dessus.
Comme illustration de ce deuxième genre d'activateur (**B**) de type résine POS, on peut citer celui obtenu à partir de γ-aminopropyltriéthoxysilane hydrolysé et soumis à un « stripping » de l'éthanol formé par l'hydrolyse. La résine polyhomocondensée obtenue, est un mélange d'oligomères contenant de 4 à 10 silicium et comprenant des motifs :

$$T(OH) = RSi(OH)O_{2/2}$$

$$T = R\ SiO_{3/2}$$

$$T(OH)_2 = RSi(OH)_2O_{1/2}$$

$$T\ (OH)_3 = RSi(OH)_3,$$

ces motifs étant respectivement présents en quantité décroissante et R = $NH_2$-$(CH_2)_3$-Il s'agit par exemple d'une résine T(OH) aminée.
L'activateur (**B**) peut être mis en oeuvre dans l'émulsion selon l'invention, soit sous la forme naturelle dans laquelle il se trouve à l'état pur soit sous forme d'hydrolysat, soit sous forme de solution aqueuse, cette dernière forme étant préférée.
Le catalyseur (**C**) est, de préférence, un composé catalytique à l'étain, généralement un sel d'organoétain, introduit de préférence sous forme d'une émulsion aqueuse. Les sels d'organoétain utilisables sont décrits, en particulier dans l'ouvrage de NOLL, Chemistry and Technology of Silicones Academic Press (1968), page 337. On peut également utiliser comme composé catalytique à l'étain soit des distannoxanes, soit des polyorganostannoxanes, soit le produit de réaction d'un sel d'étain, en particulier d'un dicarboxylate d'étain sur du polysilicate d'éthyle, comme décrit dans le brevet **US-A-3 862 919**.
Le produit de réaction d'un silicate d'alkyle ou d'un alkyltrialcoxysilane sur le diacétate de dibutylétain comme décrit dans le brevet belge **BE-A-842 305**, peut convenir aussi.
Selon une autre possibilité, on a recours à un sel d'étain II, tel que $SnCl_2$ ou l'octoate stanneux.
Les sels d'étain préférés sont les bischélates d'étain **(EP-A-147 323** et **EP-A-235 049),** les dicarboxylates de diorganoétain et, en particulier, les diversatates de dibutyl-ou de dioctylétain (brevet britannique **GB-A-1 289 900),** le diacétate de dibutyl- ou de dioctylétain, le dilaurate de dibutyl-ou de dioctylétain ou les produits d'hydrolyse des espèces précitées (e.g. les diorgano et polystannoxanes).
On utilise de 0,01 à 3, de préférence de 0,05 à 2 parties de sel d'organoétain pour 100 parties de (**A**).
De préférence; le coréticulant (**D**) est choisi parmi les alkyltrialcoxysilanes de formule $R^oSi(OR^d)_3$ dans laquelle $R^o$ = radical hydrocarboné, de préférence alkyle, et plus préférentiellement encore alkyle en $C_1$-$C_{30}$ ; $R^d$ = alkyle, de préférence alkyle en $C_1$-$C_{20}$ et, plus préférentiellement encore, méthyle ou éthyle ou parmi les produits d'hydrolyse de ces alkyltriakoxysilanes.
Selon une variante, ce coréticulant (**D**) est formé par au moins une résine silicone hydroxylée présentant, par molécule, au moins deux motifs siloxyles différents choisis parmi ceux de type M, D, T et Q, l'un au moins étant un T ou un Q ; les résines de type MQ, MDQ, TD et MDT étant particulièrement préférées. Avantageusement, cette résine

silicone hydroxylée (D) possède une teneur pondérale en groupes hydroxyles comprise entre 0,1 et 10 % et, plus préférablement encore, entre 1 et 6 % en poids.
Elle est, de préférence, exclusivement substituée par des fonctions condensables de type hydroxyle, à l'exclusion des groupements organofonctionnels hydrolysables **Sofh** e.g. alcoxy, acyloxy, susceptibles de générer des COV après condensation. En outre, par nature, cette résine (**D**) est bien évidemment exempte ou pratiquement exempte de COV.
Selon d'autres variantes, le coréticulant (**D**) peut également être choisi parmi les produits suivants : siliconates, silicates, silices (en poudre ou colloïdales) et leurs mélanges. Tous ces produits peuvent être utilisés seuls ou en mélange avec ou être associés aux résines hydroxylées (**D**) décrites supra.

Les résines silicones utilisables à titre de composés (**A**) ou (**D**) dans l'émulsion selon l'invention, sont des POS ramifiés bien connus, dont les procédés de préparation sont décrits dans de très nombreux brevets.
Les résines (**A**) sont des résines liquides à température ambiante. S'agissant des résines (**D**), on pourrait envisager d'employer des résines solides, mais les résines liquides restent néanmoins préférables.
Ces résines peuvent être incorporées dans les émulsions aqueuses telles quelles ou en solution dans un solvant organique ou une huile silicone, ou bien sous forme d'émulsion aqueuse.
Des émulsions aqueuses de résine silicone utilisables sont décrites, par exemple, dans les brevets **US-A-4 028 339, US-A-4 052 331, US-A-4 056 492, US-A-4 525 502** et **US-A-4 717 599** cités comme références.

Concernant l'agent tensioactif (**E**), il s'agit, de préférence, d'un tensioactif non ionique. Ces agents tensioactifs non ioniques sont bien entendu les mêmes que ceux que l'on peut ajouter éventuellement aux émulsions obtenues par polymérisation en émulsion, comme indiqué plus haut.
Dans le cadre de la présente invention des agents tensioactifs anioniques peuvent éventuellement être employés. A titre d'exemples, on peut citer les sels des métaux alcalins des acides hydrocarbonés aromatiques sulfoniques ou alkylsulfuriques et les agents tensioactifs non ioniques préférés sont les alkylphénols polyoxyéthylénés ou les alcools gras polyoxyéthylénés.
La quantité de tensioactif utilisable est celle couramment mise en oeuvre pour la mise en émulsion, telle que décrite en particulier dans les brevets précités et dans le brevet **US-A-2 891 920**.
Les tensioactifs non ioniques (de préférence), ioniques ou amphotères, peuvent être employés seuls ou en mélange entre eux.

Dans un mode particulièrement préféré de réalisation de la dispersion, celle-ci est caractérisée en ce que son extrait sec comprend les composants suivants dans les proportions données ci-après :

□ parties en poids □

| | |
|---|---|
| □ 100 □ | **A -** Résine liquide POS de type MDT(OH) et/ou DT(OH) : |
| □ 0,2 à 5 □ | **B -** Activateur siloxanique Fonctionnalisé Fa de type MD(OH) et/ou T(OH) |
| de préférence : 0,5 à 3 | et/ou DT(OH) et/ou MDT(OH) et/ou MT(OH) ; |
| □ 0,01 à 4 □ de préférence 0,1 à 1 | **C -** catalyseur, de préférence dicarboxylate de dialkylétain en émulsion ; |
| □ 2 à 20 □ de préférence : 10 à 15 | **D -** coréticulant, de préférence, alkyltrialcoxysilane, |
| □ 0,1 à 30 □ de préférence : 2 à 10 | **E -** tensioactif choisi, de préférence, parmi les non-ioniques et, plus préférentiellement encore parmi les alcools polyvinyliques et/ou les alcools gras alcoxylés ; |

En pratique, la dispersion selon l'invention comprend de 30 à 90 % de préférence de 30 à 60 % en poids d'eau pour 70 à 10 % de préférence 70 à 40 % en poids de phase non-aqueuse.

Après un temps de mûrissement / réticulation de quelques heures à plusieurs jours, il se produit une transformation de la résine POS **A** à l'intérieur des gouttelettes de dispersion. Comme déjà indiqué ci-avant, cette transformation est une réticulation par condensation OH / OH. Les molécules de la résine **A** réagissent entre elles ou bien avec le coréticulant **D**, voire éventuellement avec l'activateur **B** (e.g. aminé). Cette réticulation s'opère grâce au catalyseur C (e.g. sels d'étain), de préférence, assisté par un auxiliaire constitué par l'activateur **B** Cette réticulation conduit donc à un produit nouveau, qui constitue un autre objet de la présente invention et qui concerne une dispersion silicone aqueuse, utilisable notamment dans la formulation de peintures, caractérisée en ce que les gouttelettes de phase silicone huileuse de cette émulsion, comprennent une résine silicone **A'** réticulée par condensation de groupements OH/OH

cette résine **A'** comportant un taux de silanol représentant moins de 90 % des silanols initialement présents

dans la résine POS **A**.

Cette dispersion contenant la résine POS **A'** réticulée, peut notamment être celle obtenue à partir de la dispersion comprenant la résine POS **A** telle que décrite ci-dessus.

Il a déjà été précisé que la dispersion selon l'invention est une matière première ou un ingrédient, auquel on peut adjoindre toute une série d'additifs fonctionnels propres à lui donner des propriétés adaptées à des applications spécifiques.

Il s'ensuit que l'invention concerne également une formulation constituée par une dispersion aqueuse, utilisable notamment à titre de peinture ou analogues ou de matériau d'étanchéification ou de construction, caractérisée en ce que, outre l'eau, elle contient :

- Δ I Δ de la dispersion silicone telle que définie supra contenant de la résine POS **A** et/ou **A'**;
- Δ II Δ une charge siliceuse ou non, de préférence sélectionnée parmi les produits suivants : silice précipitée ou non, silice colloïdale ou en poudre. carbonates, talc, $TiO_2$, le noir de carbone, l'oxyde d'aluminium, l'alumine hydratée, la vermiculite expansée ou non, l'oxyde de zine, le mica, l'oxyde de fer, le sulfate de barium, la chaux éteinte et leurs mélanges ;
- Δ III Δ éventuellement une ou plusieurs dispersions organiques, choisies de préférence parmi celles comprenant des (co)polymèrés de l'acide (méth)acrylique et/ou de l'acide acétique ;
- Δ IV Δ éventuellement un ou plusieurs épaississants choisi de préférence parmi les épaississants cellulosiques (e. g. carboxyméthylcellulose) acryliques, polyuréthane, les gommes hydrocolloïdales (gomme xanthane) et leurs mélanges ;
- Δ V Δ éventuellement un ou plusieurs agents de coalescence choisi de préférence parmi les solvants organiques et plus préférentiellement encore parmi les glycols et/ou les coupes pétrolières aliphatiques ;
- Δ VI Δ éventuellement un ou plusieurs mouillants, dispersants de préférence choisi parmi les phosphates et/ou les polyacryliques, tels que par exemple l'hexaméthaphosphate de sodium, et les polyacrylates de sodium respectivement ;
- Δ VII Δ éventuellement un ou plusieurs agents de tension ;
- Δ VIII Δ éventuellement un ou plusieurs agents de neutralisation ;
- Δ IX Δ éventuellement un ou plusieurs biocides ;
- Δ X Δ éventuellement un ou plusieurs diluant ;
- Δ XI Δ éventuellement un ou plusieurs plastifiants, choisis, de préférence parmi les huiles silicones non réactives et/ou parmi les alkyles benzènes tels que ceux décrits dans la demande de brevet français N° 2 446 849 ;
- Δ XII Δ éventuellement un ou plusieurs antimousses ;
- Δ XIII Δ éventuellement un ou plusieurs pigments ou colorants (organiques ou minéraux) ;

Les charges II plus préférentiellement employées sont des charges non siliceuses telles que, par exemple, les carbonates de calcium. De manière générale, les charges minérales non siliceuses sont des charges semi-renforçantes ou de bourrage, ayant une granulométrie généralement comprise entre 1 et 300 μ et une surface PET inférieure à 50 $m^2/g$.

Les charges siliceuses qui peuvent être utilisées sont renforçantes ou semi-renforçantes. Il peut s'agir par exemple de silices colloïdales, de poudre de silice de combustion et de précipitation ou des mélanges de celles-ci. La silice de combustion est préférée. On peut toutefois utiliser également des charges siliceuses semi-renforçantes, telles que des terrès de diatomée ou du quartz broyé. Ces poudres siliceuses ont une surface spécifique BET supérieure à 50 $m^2/g$ de préférence comprise entre 150 et 350 $m^2/g$.

Ces charges II sont introduites dans la dispersion sous forme de poudres sèches ou sous forme de dispersions colloïdales, par exemple, par simple mélange.

De même que l'émulsion silicone aqueuse selon l'invention, la dispersion aqueuse selon l'invention se présente comme une émulsion dans laquelle la phase continue est constituée par l'eau et dans laquelle la phase discontinue comprend un ou plusieurs types de gouttelettes comportant notamment la résine POS **A** ou la résine POS **A'** réticulée, de même que tous les autres constituants non hydrosolubles ou non miscibles à l'eau.

Selon un autre de ces aspects, la présente invention concerne un procédé de préparation d'une dispersion silicone aqueuse, utilisable notamment dans la formulation de peintures, caractérisé en ce qu'il comprend les étapes essentielles successives ou non, suivantes :

- 1 • Mise en oeuvre d'au moins une résine **A** polyorganosiloxanique (POS),

  → porteuse de substituants hydroxyles condensables et présents à hauteur d'au moins 0,05 % molaire par rapport à **A**,

  → et comportant des motifs siloxyles D, T et éventuellement M et/ou Q, les motifs siloxyles T étant présents dans

un ratio molaire $\frac{T}{M + D + T + Q}$ compris entre 0,5 et 0,85, de préférence entre 0,55 et 0,80 ;

éventuellement avec au moins l'un des composés suivants :

- **B** - au moins un activateur basique choisi de préférence parmi les produits suivants : l'ammoniaque et/ou les amines solubles dans l'eau et/ou les silanes et/ou les oligo ou polysiloxanes porteurs, par molécule, d'au moins un hydroxyle et d'au moins une fonction d'activation Fa, ainsi que parmi les mélanges de ces produits, avec la condition selon laquelle on ne met en oeuvre de l'activateur **B** que si et seulement si les fonctions **Fa** portées par les autres composants mis en oeuvre, en particulier celles portées par **A** ou par D, sont présentes en quantité suffisante ;
- **D** - au moins un coréticulant de type silane et/ou siloxane porteurs d'au moins deux fonctions $-OR^d$ ($R^d$ = H ou groupement hydrocarboné aliphatique de préférence en $C_1$-$C_{20}$), par molécule : le coréticulant étant éventuellement substitué par au moins une fonction d'activation **Fa** par molécule.
- C - au moins un catalyseur C de condensation sélectionné, de préférence, parmi les composés organométalliques, et, plus préférentiellement encore parmi les dicarboxylates de dialkylétain,

- 2 • Mise en émulsion du mélange obtenu à l'étape 1 avec de l'eau et en présence d'au moins un tensioactif **E** ;
- 3 • éventuel postmélange à l'émulsion préparée dans l'étape 2 : de tout ou partie résiduelle d'au moins l'un des composés **A, B, C** et **D** ;
- 4 • éventuel mûrissement de la dispersion issue de l'étape 3 de manière que s'opère une réticulation par condensation et en émulsion de la résine, au sein des gouttelettes de phase silicone dispersée, pour obtenir in fine une dispersion dont les gouttelettes de phase hétérogène contiennent une résine silicone **A'** réticulée comportant un taux de silanol représentant moins de 90 % des silanols initialement présents dans la résine POS A,

ainsi que des motifs siloxyles T et éventuellement M et/ou D et/ou Q, les motifs T étant présents dans un ratio molaire $\frac{T}{M + D + T + Q}$ compris entre 0,5 et 0,85, de préférence entre 0,55 et 0,80.

Il est à noter que, selon une variante avantageuse, les composés **A** à **D** peuvent déjà être initialement sous forme d'émulsion.

Ce procédé de préparation est l'un de ceux qui peuvent être mis en oeuvre pour préparer l'émulsion silicone aqueuse telle que décrite ci-dessus.

Selon une disposition avantageuse de l'invention, les composés (**A** à **E**) mis en oeuvre dans ce procédé répondent aux caractéristiques qualitatives et quantitatives définies supra pour ces composés.

Suivant un mode préféré de mise en oeuvre de ce procédé de préparation d'une dispersion, on mélange tout d'abord l'eau avec au moins un tensioactif **E,** puis on ajoute ensuite la résine POS **A** ainsi que le coréticulant **D** formé, par exemple. par un alkyltrialcoxysilane.
On réalise ensuite l'émulsion par tout moyen approprié connu de l'homme de l'art, par exemple, par broyage e.g. à l'aide d'un broyeur MORITZ® ou d'un disperseur planétaire). On obtient ainsi une inversion d'émulsion. En effet, le mélange eau + tensioactif **E** + résine **A** + coréticulant **D** donne spontanément une émulsion eau dans huile que l'on transforme en émulsion huile dans eau lors de l'émulsification.
A titre de variante, on pourrait tout d'abord mélanger la résine POS **A** avec le coréticulant **B** et le tensioactif **E**, dans un premier temps et ajouter l'eau dans un deuxième temps, de manière à obtenir l'émulsion eau dans huile. On procéderait ensuite comme ci-dessus à une inversion de cette émulsion.
En pratique, une fois l'émulsion huile dans eau obtenue, on ajoute dans un second temps par mélange le catalyseur **C** et l'activateur **B**. L'émulsion ainsi additionnée est ensuite stockée quelques heures à plusieurs jours à température ambiante, de manière à ce que s'opère la réticulation du POS **A** en POS **A'**, à l'intérieur des gouttelettes d'huile silicone.

Suivant une variante avantageuse, on peut accélérer ce temps de mûrissement / réticulation en augmentant la température de l'émulsion.

La présente invention concerne également un procédé de préparation d'une dispersion aqueuse, utilisable notamment à titre de peinture ou analogues ou de matériau d'étanchéification ou de construction, caractérisé en ce qu'il consiste essentiellement à mélanger l'émulsion telle que définie ci-dessus et/ou celle obtenue par mise en oeuvre du procédé défini également ci-dessus.

avec :

⊕ une charge siliceuse ou non, de préférence sélectionnée parmi les produits suivants : silice précipitée ou non, silice colloïdale ou en poudre, carbonates, talc, $TiO_2$ et leurs mélanges ;

⊕ et au moins l'un des composés énumérés ci-après :

Δ III Δ une ou plusieurs dispersions organiques, choisies de préférence parmi celles comprenant des (co)polymères de l'acide (méth)acrylique et/ou de l'acide acétique ;

- Δ IV Δ un ou plusieurs épaississants choisi, de préférence, parmi .les , épaississants cellulosiques acryliques, polyuréthane, les gommes hydrocolloïdales et leurs mélanges ;
- Δ V Δ un ou plusieurs agents de coalescence choisi, de préférence, parmi les solvants organiques et plus préférentiellement encore parmi les glycols et/ou les coupes pétrolières aliphatiques ;
- Δ VI Δ un ou plusieurs mouillants. dispersants de préférence choisi parmi les phosphates et/ou les polyacryliques ;
- Δ VII Δ un ou plusieurs agents de tension ;
- Δ VIII Δ un ou plusieurs agents de neutralisation ;
- Δ IX Δ un ou plusieurs biocides ;
- Δ X Δ un ou plusieurs diluant ;
- Δ XI Δ un ou plusieurs plastifiants, choisis, de préférence parmi les huiles silicones non réactives ;
- Δ XII Δ un ou plusieurs antimousses ;
- Δ XIII Δ un ou plusieurs pigments ou colorants (organiques ou minéraux) ;

La dispersion préparée selon ce procédé peut être, notamment, celle qui est décrite ci-avant et qui constitue l'un des objets de la présente invention.

Les mélanges des additifs fonctionnels avec la dispersion silicone aqueuse de base, sont réalisés selon des procédures et à l'aide de dispositifs conventionnels parfaitement connus de l'homme du métier.

La présente invention a également pour objet tous les produits finis dont notamment :

- peintures à l'eau, crépis, lazures, imprégnations, revêtements semi-épais (RSE)....
- matériaux d'étanchéification aqueux : mastics, joints, colles ...
- matériaux de construction : bétons hautes performances, matériau de comblement & rebouchage....

comprenant la dispersion incluant la résine POS **A** et/ou la dispersion incluant la résine POS (**A'**) réticulée telles que décrites supra ou telles qu'obtenues par les procédés définis eux aussi ci-avant.

Sans que cela ne soit limitatif, l'invention vise plus particulièrement les peintures constituées par les dispersions aqueuses comprenant les ingrédients I à XII mentionnés ci-dessus.

Avant d'utiliser les dispersions silicones aqueuses dans la formulation des dispersions aqueuses telles que des peintures, il est préférable d'attendre que lesdites émulsions aient été soumises à une étape de mûrissement/ réticulation d'une durée suffisante, pour que la résine POS **A'** contenue dans les gouttelettes soit suffisamment réticulée.

Les peintures obtenues à l'aide des dispersions selon l'invention s'appliquent extrêmement facilement, par application sous forme de film à l'aide de tout outil ou moyen approprié : pinceau, pulvérisation, etc.

Les films de peinture obtenus sont peu toxiques et présentent une résistance à l'abrasion humide élevée. Ils sont tout à fait satisfaisants en ce qui concerne l'imperméabilité à l'eau externe et la perméabilité à la vapeur d'eau interne. Ils présentent un bel aspect sec dur et propre. Et ils conservent leurs propriétés mécaniques, de façon durable. On notera également qu'ils contiennent peu ou pas de produits toxiques ou dangereux. Leur fabrication et leur utilisation s'effectuent donc sans risques.

Leur bon pouvoir liant et leur excellente cohésion constituent avec le caractère écologique des atouts commerciaux incontestables.

Une fois étendues et mises sous forme de film, les dispersions aqueuses selon l'invention sèchent rapidement.

La présente invention n'est pas limitée à l'application peinture mais englobe naturellement toutes les applications envisageables pour des dispersions silicones aqueuses telles que présentées ci-avant.

Les exemples qui suivent illustrent la préparation des dispersions silicones aqueuses de base ainsi que des dispersions aqueuses préparées à partir de celles-ci pour des applications finales en peinture. Ces exemples montrent également des tests d'évaluation des peintures ainsi obtenues.

## EXEMPLES

Les % utilisés dans ces exemples sont tous des pourcentages pondéraux.

**EXEMPLES 1 A 10 : PREPARATION DE DISPERSIONS SILOXANIQUES SELON L'INVENTION**

**A/ Matières premières mises en oeuvre**

Δ Résine POS **$A_1$** : résine méthyle silicone hydroxylée à hauteur de 2,5 à 2,7 % en poids, avec un poids moléculaire de Mw d'environ 1500 g/M et Mn d'environ 640 g/M.
La résine $A_1$ est caractérisée par la composition suivante :
motifs T($RSiO_{3/2}$) = 69-71 % molaire
motifs D ($R_2SiO_{2/2}$) = 29-31 % molaire.
Δ Activateur **B**: hydrolysat aqueux de gamma-amino-propyltriéthoxysilane à 20% de matières actives, duquel l'alcool a été éliminé par stripping (produit commercial OSI® de type VS142).
Δ Catalyseur **C** :émulsion de dioctyldilaurate d'étain à 35 % de matière active en étain réalisée avec un tensioactif du type alcool polyvinylique, en l'occurrence celui commercialisé sous la marque RHODOVIOL®
Δ Coréticulant **D** : OTES = Octyltriéthoxysilane ou Silane 116: méthyltriéthoxysilane
Δ Tensioactifs **E** :

- $E_1$ : tensio actif type alcool polyvinylique de type de ceux commercialisés sous la marque RHODOVIOL®
- $E_2$ : tensioactif de type alcool gras éthoxylé comprenant environ 12 unités OE et d'une HLB d'environ 14,5 ; du type de celui commercialisé sous la marque Renex® 30 (ICI) ;
- $E_3$ :tensioactif type alcool gras éthoxylé comprenant environ 8 OE et d'une HLB d'environ 13 ; du type Genapol X080 (HOECHST) ;

**B/ Méthodologie**

Plusieurs protocoles de préparation de dispersions sont envisageables. Sans que cela ne soit limitatif, on retient dans les présents exemples celui consistant à :

- 1 - mélanger l'eau et le ou les tensioactifs **E**,
- 2 - incorporer dans ce mélange eau + **E** la résine POS **A** et éventuellement le coréticulant **B**, cette incorporation étant réalisée sous agitation de manière à obtenir une émulsion eau dans huile ;
- 3 - procéder à l'inversion de l'émulsion E/H obtenu en - 2 - par broyage (broyeur MORITZ®) pour obtenir in fine, une émulsion huile dans eau (H/E).
- 4 - réaliser les post-ajouts de catalyseur C et d'activateur B par mélange.
- 5 - et faire en sorte que se produise un mûrissement/réticulation de la dispersion H/E comprenant les composés **A, B, C, D, E,** en stockant celle-ci pendant 7 jours à température ambiante, ou 3 jours à 35° C.

**C/ Conditions de réalisation des exemples et résultats**

Le tableau I ci-dessous résume les préparations de dispersions réalisées dans les exemples 1 à 10.

TABLEAU I

| Exemples | 1 comparatif | 2 | 3 | 4 | 5 | 6 | 7 | 8 | 9 | 10 | 11 comparatif | 12 | 13 | 14 |
|---|---|---|---|---|---|---|---|---|---|---|---|---|---|---|
| Résine POS $A_1$ | 40 | 40 | 40 | 40 | 40 | 60 | 60 | 59,4 | 58,8 | 48,4 | | | | |
| Résine POS $A_2$ | | | | | | | | | | | 60 | 60 | 57 | 54 |
| Coréticulant **D** OTES | | | | | | | | 0,6 | 1,2 | | | | | |
| Coréticulant **D** Silane 116 | | | | | | | | | | 1,6 | | | | |
| Tensioactif **E** Renex 30 | | | | | | 3 | 3 | 3 | 3 | | 3 | 3 | 3 | 3 |
| Tensioactif **E** Genapol X 080 | | | | | | | | | | 3 | | | | |
| Tensioactif **E** Rhodoviol | 2 | 2 | 2 | 2 | 2 | | | | | | | | | |
| **Mise en émulsion par broyage** | oui | oui | oui | oui | oui | oui | oui | oui | oui | oui | oui | oui | oui | oui |
| **Post ajout d'émulsion de catalyseur C** | | 0,1 | 0,1 | 0,15 | 0,25 | | 0,15 | 0,15 | 0,15 | 0,25 | | 0,25 | 0,25 | 0,25 |
| **Post ajout d'activateur B** | | 0,2 | 1 | 1,5 | 2,5 | | 1,5 | 1,5 | 1,5 | 2,5 | | 0,25 | 0,25 | 0,25 |
| extrait sec* à T0 juste après la mise en émulsion | | | | | | 44,7 | 44,7 | 46,7 | 45,6 | 36 | | | | |
| extrait sec* après 3 j de murissement/réticulation à 35°C | | | | | | 44,7 | 56,0 | 54,6 | 55,1 | 43,9 | | | | |

NB : Les quantités données dans ce TABLEAU I sont des quantités exprimées en parties en poids.

* La quantité d'extrait sec est determinée par pesée après la dispersion 1h à 105° C.

**EXEMPLES 15 A 24 : PREPARATION ET EVALUATION DE DISPERSIONS AQUEUSES DU TYPE FORMULATIONS DE PEINTURES**

**A/ Formulation de Peinture**

Tableau II

| Formulation peinture | parties en poids |
|---|---|
| Eau | 5,9 |
| Biocide<br>Parmétol® DF 12 (Laboratoires PHAGOGEN) | 0.28 |
| Mouillant<br>Hexamétaphosphate de sodium à 10% | 2.8 |
| Dispersant polyacrylique<br>Coatex® P50 | 0.42 |
| Gomme naturelle<br>Rhodopol® 50 MD à 1% (RHONE POULENC) | 9.74 |
| Agent de tension<br>Monopropylèneglycol | 2.09 |
| TiO2<br>Rhoditan® RL60 (RHONE POULENC) | 17.4 |
| Talc<br>Talc10MO (Talc de luzénac) | 6.5 |
| Carbonate de calcium<br>OMYA® BLP2 | 37,5 |
| Dispersion rapide pendant<br>puis ajout sous agitation des composés suivants : | |
| Agent de coalescence<br>White spirit® | 1,4 |
| Agent de neutralisation<br>KOH à 10% | 0,21 |
| Dispersion d'un copolymère styrène/acrylique Rhodopas® DS910 (extrait sec = 50 % - viscosité = 4500 mPa.s et Température Minimale de Formation de Film (TMFF) = 18° C) | 13.5 |
| Dispersion siloxanique exprimée en matières actives* | 4.5 |
| Épaississant polyuréthanne associatif<br>Coatex BR100P | 2,4 |

* matières actives = extrait sec résine **A** + coréticulant **D** + catalyseur **C** + Activateur silane aminé **B** - alcoxyle volatile libéré lors de la polycondensation

**B) Préparation de la peinture**

Les solutions de mouillants et d'épaississant sont préparés afin que l'ensemble des constituants de la peinture soit ajouté les uns après les autres, dans l'ordre mentionné, dans un mélangeur. L'empàtage des pigments est réaliser à vitesse de dispersion lente Ensuite la dispersion est réalisée à vitesse rapide. La fabrication de la peinture se poursuit par l'ajout à vitesse lente des autres constituants de la peinture. Il est préférable d'ajouter l'émulsion siloxanique après le latex.

**C) Tests d'évaluation en peinture**

- 1 - Application sur plaque de verre

Un film d'émulsion est appliquée directement sur plaque de verre et ensuite séché à température de 23°C et à une humidité relative de 55% pendant 2 jours.

- 2 - Résistance à l'abrasion humide

Suivant norme AFNOR NFT 53778

**D) Caractéristiques en peinture**

Tableau III

| Exemples de formulation peinture | 15 | 16 | 17 | 18 | 19 | 20 | 21 | 22 | 23 | 24 | 25 | 26 | 27 | 28 |
|---|---|---|---|---|---|---|---|---|---|---|---|---|---|---|
| Références des dispersions siloxaniques employées et préparées dans les exemples précédents | 1 comparatif | 2 | 3 | 4 | 5 | 6 | 7 | 8 | 9 | 10 | 11 comparatif | 12 | 13 | 14 |
| Application humide | 100 µ | 100 µ | 100 µ | 100 µ | 100 µ | 100 µ | 100 µ | 100 µ | 100 µ | 100 µ | 100 µ | 100 µ | 100 µ | 100 µ |
| Séchage de la dispersion 10 j à 23° C et à HR = 55 % (Evaluation visuelle et à l'ongle) | Poisseux | Poisseux | sec | sec | sec | Poisseux | sec | sec | sec | sec | poisseux | sec | sec | sec |
| Résistance de la peinture à l'abrasion humide (en cycles) | 1800 | 1200 | 4300 | 7 800 | 10 000 | 2 600 | 10 000 | 10 000 | 10 000 | 10 000 | 860 | 4 000 | 7 100 | 10 000 |

La dispersion catalysée sèche alors que cela n'est pas le cas sans catalyse.
Les dispersions catalysées permettent de formuler des peintures qui ont un pouvoir liant humide élevé. Le pouvoir liant est caractérisé par le test de résistance à l'abrasion humide (RAH).
La RAH est faible pour une dispersion non catalysée [exemples 1 comparatif (résine $A_1$) et 11 comparatif (résine $A_2$) : 1800 et 860 cycles] et devient élevée [jusqu'à 10 000 cycles] pour une dispersion catalysée.
Le pouvoir liant est directement relié à la quantité d'activateur B (hydrolysat de silane aminé) mise en oeuvre.
Cette quantité croit dans les dispersions des exemples 2 à 5
La comparaison des résultats obtenus pour les exemples 18 à 20, montre que l'ajout de coréticulant **D** (trialcoxysilane) à la résine **A** permet d'améliorer la RAH de la peinture fabriquée avec cette dispersion catalysée.

**EXEMPLES 25 A 28 : PREPARATION ET EVALUATION D'AUTRES DISPERSIONS AVEC B OU C SEULEMENT**

Tableau IV

| Exemples | 1 comparatif | 25 | 26 | 27 | 28 |
|---|---|---|---|---|---|
| Résine POS **$A_1$** | 40 | 40 | 40 | 40 | 40 |
| Tensioactif **E** : Rhodoviol | 2 | 2 | 2 | 2 | 2 |
| Mise en émulsion par broyage | oui | oui | oui | oui | oui |
| Post-ajout catalyseur **C** | | 0 | 0 | 0.15 | 0,30 |
| Post-ajout activateur **B** | | 0,15 | 0,3 | 0 | 0 |
| Application humide | 100 µ | 100 µ | 100 µ | 100 µ | 100 µ |
| Test rapide d'évaluation d'un film d'émulsion sur plaque de verre | Poisseux | Poisseux | Poisseux | Poisseux | Poisseux |
| (Quantités en parties en poids) | | | | | |

Les émulsions sèchent mal si elles ne comprennent que le catalyseur **C** (sels d'étain) ou que l'activateur **B** (silane aminé). Il, est donc préférable de mettre en oeuvre le catalyseur **C** (Sels de Sn) et l'activateur **B** (silane aminé)

**EXEMPLES 29 ET 30 : PREPARATION D'AUTRES DISPERSIONS AVEC D'AUTRES ACTIVATEURS AMINES HYDROSOLUBLES (B) QUE LES SILANES AMINES, A SAVOIR L'AMMONIAQUE**

Tableau V

| Exemples | 1 comparatif | 29 | 30 |
|---|---|---|---|
| Résine POS **$A_1$** ou **$A_2$** | 40 | 40 | 40 |
| Rhodoviol | 2 | 2 | 2 |
| Mise en émulsion par broyage | oui | oui | oui |
| Post ajout de catalyseur **C** | | 0,25 | 0,25 |
| Post ajout Ammoniaque **B** | | 0,7 | 1.5 |
| Application humide | 100 µ | 100 µ | 100 µ |
| Test rapide d'évaluation d'un film d'émulsion sur plaque de verre | Poisseux | sec | sec |

Ces exemples montrent que la polycondensation des hydroxyles de la résine (**A**) peut être réalisée par une amine (**B**) soluble en phase aqueuse comme l'ammoniaque.

**EXEMPLES 31 ET 32 : MISE EN EVIDENCE DE LA RETICULATION (POLYCONDENSATION OH/OH) IN SITU DE LA RESINE POS A DANS LES GOUTTELETTES DE PHASE SILICONE DE LA DISPERSION H/E SELON L'INVENTION**

La polycondensation a été mise en évidence par deux techniques: la Distribution des Masses Molaires et la Spectrométrie RMN.
La RMN différencie les atomes de silicium de connectivités différentes, la connectivité étant le nombre de ponts siloxanes établis par le silicium. Le motif T(OH) est de connectivité 2, tandis que T est de connectivité 3.

Tableau VI

| Exemples | 31 | 32 |
|---|---|---|
| Dispersion **A + D + E** selon les exemples 2 à 5 | 100 | 100 |
| Post ajout activateur **B** | | 1 |
| Post ajout catalyseur **C** | | 0,1 |

Tableau VI

| Analyse RMN $^{29}$Si dispersion exemple 31 | t=0 | t=7 jours | t=33 jours |
|---|---|---|---|
| Motif %D cycle | 1,6 | 1,6 | 1,1 |
| Motif %DOH | 1,1 | 1,1 | 1,1 |
| Motif %D | 27,9 | 29 | 27,3 |
| Motif %TOH et T cycles | 19 | 18,2 | 17,8 |
| Motif %T | 50,4 | 50,1 | 52,7 |

Tableau VII

| Analyse RMN $^{29}$Si dispersion exemple 32 | t=0 | t=7 jours | t=16 jours | t=30 jours |
|---|---|---|---|---|
| Motif %D cycle | 2 | 1,5 | 1,3 | 33 |
| Motif %DOH | 1,3 | 1,1 | 1,1 | |
| Motif %D | 27,4 | 28,2 | 32,3 | |
| Motif %TOH et T cycles | 16,3 | 10,6 | 5,15 | 5,3 |
| Motif %T | 53 | 58,6 | 60,15 | 61,7 |

<u>Condition de stockage</u> :

t=0 : 7 jours à 23°C
t=7j : 7 jours à 23°C + 7 jours à 50°C
t=16j : 7 jours à 23°C + 16 jours à 50°C
t = 30 j : 7 jours à 23° C + 30 jours à 50° C
t = 33 j : 7 jours à 23° C + 33 jours à 50° C.

<u>Commentaires résultats exemple 31</u> :

Sans étain **C** ni amine **B,** le système est stable.

<u>Commentaires résultats exemple 32</u> :

Avec étain **C** et amine **B,** la polycondensation apparaît.
Les siliciums T(OH) diminuent au cours du temps. Ils se transforment en motifs T, par polycondensation. La fraction de motifs T augmente effectivement, passant de 53% à t=0 à 59% (7 j), 60% (16 j) et 62% (30 j).
La Distribution des Masses Molaires évolue dans le même sens : la résine de l'émulsion de l'exemple 31 une masse

molaire moyenne en poids de 560 g/mol, tandis que l'échantillon de l'exemple 32, après 30 j de stockage, a une masse de 760 g/mol.
Ces deux types d'analyse permettent d'affirmer qu'il se produit des réactions de polycondensation dans les gouttelettes d'émulsion.

## Revendications

**1.** Dispersion silicone aqueuse, utilisable notamment dans la formulation de peintures, **caractérisée :**

◊ **en ce que** les gouttelettes de phase non-aqueuse de cette dispersion, sont obtenues à partir d'au moins une résine **A** polyorganosiloxanique (POS) liquide, ayant pour particularités, avant émulsification :

→ d'être porteuse de substituants hydroxyles condensables et présents à hauteur d'au moins 0,05 % en poids ;
→ et de comporter des motifs siloxyles D, T et éventuellement M et/ou Q, les motifs siloxyles T étant présents dans un ratio molaire $\frac{T}{M + D + T + Q}$ compris entre 0,5 et 0,85, de préférence entre 0,55 et 0,80 ;

◊ et en ce que la composition de sa phase non-aqueuse est la suivante, ☐ en parties en poids ☐

| | |
|---|---|
| ☐ 100 ☐ | **A** - une ou plusieurs résines POS liquide(s) du type de celle définie ci-dessus et éventuellement substituée par au moins une fonction d'activation **Fa** de la réticulation in situ de la résine A; |
| ☐ 0 à 20 ☐ | **B -** au moins un activateur de la réticulation in situ de la résine A, cet activateur étant basique, hydrosoluble, et choisi - de préférence - :<br>Δ parmi les amines hydrosolubles ou hydrodispersables<br>Δ et/ou parmi les produits obtenus à partir de silanes et/ou d'oligo ou de polysiloxanes porteurs, par molécule et avant émulsification, d'au moins un hydroxyle et d'au moins une fonction d'activation **Fa**,<br>Δ ainsi que parmi les mélanges de ces produits,<br>*avec la condition selon laquelle* la composition est exempte d'activateur **B** si et seulement si les fonctions **Fa** portées par d'autres composants de la composition, en particulier celles portées par **A** et/ou par **D**, sont présentes en quantité suffisante; |
| o > 0☐ | **C -** au moins un catalyseur de condensation sélectionné, de préférence parmi les composés organométalliques, et plus préférentiellement encore parmi les dicarboxylates de dialkylétain ; |
| ☐ 0 à 30 ☐ | **D** - au moins un coréticulant, sélectionné de préférence parmi les produits obtenus à partir de silanes et/ou de siloxanes initialement porteurs d'au moins deux fonctions $-OR^d$ ($R^d$ = H ou groupement hydrocarboné aliphatique de préférence en $C_1$-$C_{20}$), par molécule,<br>ce coréticulant **D** étant éventuellement substitué par au moins une fonction d'activation **Fa** par molécule ; |
| ☐ 0,01 à 10 ☐ | **E** - au moins un tensioactif. |

**2.** Dispersion selon la revendication 1, **caractérisée par** une teneur en Composés Organiques Volatils (COV) inférieure ou égale à 15 %, de préférence à 10 %, et, plus préférentiellement encore à 5 % ; ces % étant des % en poids par rapport à la phase non-aqueuse de l'émulsion.

**3.** Dispersion selon la revendication 2, **caractérisé en ce que** la résine A hydroxylée comprend également des groupements alcoxyles $-OR^a$ dans lesquels $R^a$ = groupement hydrocarboné de préférence en $C_1$-$C_{20}$, et plus préférentiellement encore en $C_1$-$C_{10}$.

**4.** Dispersion selon l'une quelconque des revendications 1 à 3, **caractérisé en ce que** Δ la résine (**A**) est liquide à l'atmosphère ambiante, cet état se traduisant par une viscosité $\eta_r$ à 25° C comprise entre 50 et 200000 mPa.s, de préférence entre 200 et 20000 mPa.s ;
Δ cette résine (**A**) est en outre sélectionnée parmi celles du type $T(OR^a)$, $DT(OR^a)$, $MDQ(OR^a)$, $MT(OR^a)$, $MQ(OR^a)$, $MDT(OR^a)$, ou les mélanges de celles-ci, les résines $DT(OR^a)$ et/ou $MDT(OR^a)$ étant particulièrement préférées.

**5.** Dispersion selon l'une quelconque des revendications 1 à 4 **caractérisé,**

→ **en ce que** l'activateur **B** est :

- l'ammoniaque
- et/ou une amine hydrosoluble, de préférence une amine primaire ou secondaire ;
- et/ou un silane hydroxylé ou alcoxylé,
- et/bu un polydiorganosiloxane hydroxylé ou alcoxylé, linéaire à motifs siloxyles D et/ou MD ;
- et/ou une résine POS hydroxylée ou alcoxylée et comprenant des motifs siloxyles T et éventuellement M et/ou D et/ou Q, ou bien encore des motifs Q et M et/ou D et/ou T ;

→ et en ce que cet activateur (B), si il comprend du silicium, est porteur d'au moins une Fa qui est liée directement ou non à un atome de silicium.

**6.** Dispersion selon la revendication 5, **caractérisé en ce que** l'activateur (**B**) est une résine sélectionnée parmi celles du type $T(OR^b)$, $DT(OR)^b$, $DQ(OR)^b$, $MT(OR)^b$, $MQ(OR)^b$, $MDT(OR)^b$, $MDQ(OR)^b$ ou les mélanges de celles-ci, avec $R^b$ = H ou groupement hydrocarboné.

**7.** Dispersion selon l'une quelconque des revendications 1 à 6, **caractérisée en ce que** le coréticulant (**D**) est choisi parmi les alkyltrialcoxysilanes de formule $R^oSi(OR^d)_3$ dans laquelle $R^o$ = radical hydrocarboné, de préférence alkyle, et plus préférentiellement encore alkyle en $C_1$-$C_{30}$ ; $R^d$ = alkyle, de préférence alkyle en $C_1$-$C_{20}$ et, plus préférentiellement encore, méthyle ou éthyle, ou parmi les produits d'hydrolyse de ces alkyltrialcoxysilanes.

**8.** Dispersion selon l'une quelconque des revendications 1 à 7, **caractérisée en ce que** outre l'eau, elle comprend les composants suivants dans les proportions données ci-après, ☐ en parties en poids ☐

☐ 100 ☐ **A** - Résine liquide POS de type MDT(OH) et/ou DT(OH) ;

☐ 0,2 à 5, de préférence 0,3 à 3 ☐ **B** - Activateur siloxanique M(OH) et/ou MD(OH) et/ou T(OH) et/ou DT(OH) et/ou MDT(OH) et/ou MT(OH) ;

☐ 0,01 à 4, de préférence 0,1 à 1 ☐ **C** - catalyseur, de préférence dicarboxylate de dialkylétain ;

☐ 2 à 20, de préférence 10 à 15 ☐ **D** - coréticulant, de préférence, alkyltrialcoxysilane,

☐ 0,1 à 15, de préférence 2 à 10 ☐ **E** - tensioactif choisi, de préférence, parmi les non-ioniques et, plus préférentiellement encore parmi les alcools polyvinyliques et/ou les alcools gras alcoxylés ;

**9.** Dispersion silicone aqueuse, utilisable notamment dans la formulation de peintures, **caractérisée en ce que** les gouttelettes de phase silicone de cette dispersion, comprennent une résine silicone (A') réticulée par condensation de groupements OH/OH ; cette résine (**A'**) comportant un taux de silanol représentant moins de 90 % des silanols initialement présents dans la résine POS **A**.

**10.** Dispersion selon la revendication 9 **caractérisée en ce qu'**elle est obtenue à partir de la dispersion selon l'une quelconque des revendications 1 à 8.

**11.** Formulation aqueuse, utilisable notamment à titre de peinture ou analogues, ou de matériau d'étanchéification ou de construction, **caractérisée en ce que**, outre l'eau, elle contient :

Δ I Δ de la dispersion silicone selon l'une quelconque des revendications 1 à 10 ;

Δ II Δ une charge siliceuse ou non, de préférence sélectionnée parmi les produits suivants : silice précipitée ou non, silice colloïdale ou en poudre, carbonates, talc, $TiO_2$ et leurs mélanges ;

Δ III Δ éventuellement une ou plusieurs dispersions organiques, choisies de préférence parmi celles comprenant des (co)polymères de l'acide (méth)acrylique et/ou de l'acide acétique ;

Δ IV Δ éventuellement un ou plusieurs épaississants choisi de préférence parmi les épaississants cellulosiques acryliques, polyuréthane, les gommes naturelles et leurs mélanges ;

Δ V Δ éventuellement un ou plusieurs agents de coalescence choisi de préférence parmi les solvants organiques et plus préférentiellement encore parmi les glycols et/ou les coupes pétrolières aliphatiques ;

Δ VI Δ éventuellement un ou plusieurs mouillants, dispersants de préférence choisi parmi les phosphates et/ou les polyacryliques ;

Δ VII Δ éventuellement un ou plusieurs agents de tension ;

Δ VIII Δ éventuellement un ou plusieurs agents de neutralisation ;

Δ IX Δ éventuellement un ou plusieurs biocides ;

Δ X Δ éventuellement un ou plusieurs diluant ;

Δ XI Δ éventuellement un ou plusieurs plastifiants, choisis, de préférence parmi les huiles silicones non réactives ;

Δ XII Δ éventuellement un ou plusieurs antimousses ;

Δ XIII Δ éventuellement un ou plusieurs pigments ou colorants (organiques ou minéraux) ;

**12.** Procédé de préparation d'une dispersion silicone aqueuse, utilisable notamment dans la formulation de peintures, **caractérisé en ce qu'**il comprend les étapes essentielles successives ou non, suivantes :

- 1 • Mise en oeuvre d'au moins une résine A polyorganosiloxanique (POS),

  → porteuse de substituants hydroxyles condensables et présents à hauteur d'au moins 0,05 % poids par rapport à A,
  → et comportant des motifs siloxyles D, T et éventuellement M et/ou Q, les motifs siloxyles T étant présents dans un ratio molaire compris entre 0,5 et 0,85 ; de préférence entre 0,55 et 0,80.
  éventuellement avec au moins l'un des composés suivants :

  - **B** - au moins un activateur basique, choisi de préférence parmi les produits suivants : l'ammoniaque et/ou les amines solubles dans l'eau et/ou les silanes et/ou les oligo ou polysiloxanes porteurs, par molécule, d'au moins un hydroxyle et d'au moins une fonction d'activation **Fa**, ainsi que parmi les mélanges de ces produits,
    avec la condition selon laquelle on ne met en oeuvre de l'activateur **B** que si et seulement si les fonctions **Fa** portées par les autres composants mis en oeuvre, en particulier celles portées par **A** ou par **D**, sont présentes en quantité suffisante ;
  - **D** - au moins un coréticulant de type silane et/ou siloxane porteurs d'au moins deux fonctions $-OR^d$ ($R^d$ = H ou groupement hydrocarboné aliphatique de préférence en $C_1$-$C_{20}$), par molécule ;
    le coréticulant étant éventuellement substitué par au moins une fonction d'activation **Fa** par molécule,
  - **C** - au moins un catalyseur **C** de condensation sélectionné, de préférence, parmi les composés organométalliques, et, plus préférentiellement encore parmi les dicarboxylates de dialkylétain,

- 2 • Mise en émulsion du mélange obtenu à l'étape 1 avec de l'eau et en

- 3 • éventuel postmélange à l'émulsion préparée dans l'étape 2 de tout ou partie résiduelle d'au moins l'un des composés **A, B, C** et **D** ;

- 4 • éventuel mûrissement de la dispersion issue de l'étape 3 de manière que s'opère une réticulation par condensation et en émulsion de la résine, au sein des gouttelettes de phase silicone dispersée, pour obtenir in fine une dispersion dont les gouttelettes de phase hétérogène contiennent une résine silicone **A'** réticulée comportant :

◊ un taux de silanol représentant moins de 90 % des silanols initialement présents dans la résine POS **A**,
◊ ainsi que des motifs siloxyles T et éventuellement M et/ou D et/ou Q, les motifs T étant présents dans un ratio molaire compris entre 0,5 et 0,85, de préférence entre 0,55 et 0,80.

**13.** Procédé de préparation selon la revendication 12, **caractérisé en ce que** les composés **A** à **E** mis en oeuvre répondent aux caractéristiques qualitatives et quantitatives telles que définies dans les revendications 1 à 10.

**14.** Procédé de préparation d'une formulation aqueuse, utilisable notamment à titre de peinture ou analogues ou de matériau d'étanchéification ou de construction, **caractérisé en ce qu'**il consiste essentiellement à mélanger la dispersion selon l'une quelconque des revendications 1 à 10 et/ou celle obtenue par mise en oeuvre du procédé selon l'une des revendications 12 et 13, avec :

⊕ une charge siliceuse ou non, de préférence sélectionnée parmi les produits suivants : silice précipitée ou non, silice colloïdale ou en poudre, carbonates, talc, $TiO_2$ et leurs mélanges ;

⊕ et au moins l'un des composés énumérés ci-après :

Δ III Δ une ou plusieurs dispersions organiques, choisies de préférence parmi celles comprenant des (co) polymères de l'acide (méth)acrylique et/ou de l'acide acétique ;

Δ IV Δ un ou plusieurs épaississants choisi, de préférence, parmi les épaississants cellulosiques acryliques, les polyuréthanes, les gommes naturelles et leurs mélanges ;

Δ V Δ un ou plusieurs agents de coalescence choisi, de préférence, parmi les solvants organiques et plus préférentiellement encore parmi les glycols et/ou les coupes pétrolières aliphatiques ;

Δ VI Δ un ou plusieurs mouillants, dispersants de préférence choisi parmi les phosphates et/ou les polyacryliques ;

Δ VII Δ un ou plusieurs agents de tension ;

Δ VIII Δ un ou plusieurs agents de neutralisation ;

Δ IX Δ un ou plusieurs biocides ;

Δ X Δ un ou plusieurs diluant ;

Δ XI Δ un ou plusieurs plastifiants, choisis, de préférence parmi les huiles silicones non réactives ;

Δ XII Δ un ou plusieurs antimousses ;

Δ XIII Δ un ou plusieurs pigments ou colorants (organiques ou minéraux) ;

**15.** Peinture **caractérisée en ce qu'**elle comprend :

- de la dispersion selon l'une quelconque des revendications 1 à 10 ou de la dispersion obtenue par mise en oeuvre du procédé selon la revendication 12 ou 13,
- et/ou de la formulation selon la revendication 11 ou de la formulation obtenue par mise en oeuvre du procédé selon la revendication 14.

## Patentansprüche

**1.** Wässrige Silikondispersion, die insbesondere zur Formulierung von Anstrichmitteln verwendbar ist, **dadurch gekennzeichnet, dass**

◊ die Tröpfchen der nicht-wässrigen Phase dieser Dispersion ausgehend von mindestens einem flüssigen Polyorganosiloxanharz (POS)A erhalten werden, welches vor der Emulgation folgende Besonderheiten hat:

→ Trägerin von kondensierbaren Hydroxylsubstituenten ist, die in einer Menge von mindestens 0,05 Gew.-% vorliegen;

→ Siloxylgruppen D, T und gegebenenfalls M und/oder Q enthält, wobei die Siloxylgruppen T im Molverhältnis $\frac{T}{M + D + T + Q}$ vorliegen, das zwischen 0,5 und 0,85 und vorzugsweise zwischen 0,55 und 0,80 liegt;

◊ die Zusammensetzung ihrer nicht-wässrigen Phase die folgende □ in Gewichtsteilen □, ist:

□ 100 □ A - ein flüssiges POS-Harz oder mehrere flüssige POS-Harze des oben definierten Typs, das/die gegebenenfalls durch eine Aktivierungsfunktion Fa für die in situ-Vernetzung des Harzes A substituiert ist/sind;

□ 0-20 □ B - mindestens ein Aktivator für die in situ-Vernetzung des Harzes A, wobei dieser Aktivator basisch, wasserlöslich und vorzugsweise ausgewählt ist aus:

Δ wasserlöslichen oder wasserdispergierbaren Aminen

Δ und/oder Produkten, die ausgehend von Silanen und/oder Oligo- oder Polysiloxanen erhalten werden, die pro Molekül und vor Emulgation mindestens ein Hydroxyl und mindestens eine Aktivierungsfunktion Fa tragen;

Δ sowie aus den Gemischen dieser Produkte, mit der Maßgabe, dass die Zusammensetzung keinen Aktivator B umfasst, wenn und nur wenn die Funktionen Fa, die von anderen Bestandteilen der Zusammensetzung getragen werden, insbesondere die, die von A und/oder D getragen werden, in ausreichender Menge vorliegen;

□ > 0 □ C - mindestens ein Kondensationskatalysator, der vorzugsweise unter metallorganischen Verbindungen und mehr bevorzugter unter Dialkylzinndicarboxylaten ausgewählt ist;

□ 0-30 □ D - mindestens ein Co-Vernetzungsmittel, das vorzugsweise aus Produkten, die ausgehend von Silanen und/oder Siloxanen erhalten werden und die ursprünglich mindestens zwei Funktionen $-OR^d$ ($R^d$ = H oder eine aliphatische Kohlenwasserstoffgruppe mit vorzugsweise $C_1$-$C_{20}$) pro Molekül haben, ausgewählt ist, wobei dieses Co-Vernetzungsmittel D gegebenenfalls durch mindestens eine Aktivierungsfunktion Fa pro Molekül substituiert ist;

□0,01-10□ E - mindestens ein Tensid.

**2.** Dispersion nach Anspruch 1, **dadurch gekennzeichnet, dass** der Gehalt an flüchtigen organischen Verbindungen (Composés Organiques Volatils = COV) 15 %, vorzugsweise 10 % und noch bevorzugter 5 % oder weniger ist, wobei diese Prozente Gewichtsprozent, bezogen auf die nicht-wässrige Phase der Emulsion, sind.

**3.** Dispersion nach Anspruch 2, **dadurch gekennzeichnet, dass** das hydroxylierte Harz A auch Alkoxylgruppen $OR^a$, in denen $R^a$ = Kohlenwasserstoffgruppierung, vorzugsweise mit $C_1$-$C_{20}$ und noch bevorzugter mit $C_1$-$C_{10}$, umfasst .

**4.** Dispersion nach einem der Ansprüche 1 bis 3, **dadurch gekennzeichnet, dass**
Δ das Harz (A) bei der Umgebungsatmosphäre flüssig ist,
wobei sich dieser Zustand durch eine Viskosität $\eta_r$ bei 25°C von zwischen 50 und 200.000 mPa.s, vorzugsweise zwischen 200 und 20.000 mPa.s wiederspiegelt;
Δ dieses Harz (A) außerdem aus denen des Typs $T(OR^a)$, $DT(OR^a)$, $MDQ(OR^a)$, $MT(OR^a)$, $MQ(OR^a)$, $MDT(OR^a)$ und Gemischen dieser ausgewählt ist, wobei die Harze $DT(OR^a)$ und/oder $MDT(OR^a)$ besonders bevorzugt sind.

**5.** Dispersion nach einem der Ansprüche 1 bis 4, **dadurch gekennzeichnet, dass**:

→ der Aktivator B ist:

- Ammoniak
- und/oder ein wasserlösliches Amin, vorzugsweise ein primäres oder sekundäres Amin,
- und/oder ein hydroxyliertes oder alkoxyliertes Silan,
- und/oder ein hydroxyliertes oder alkoxyliertes lineares Polydiorganosiloxan mit Siloxylgruppen D und/oder MD;
- und/oder ein hydroxyliertes oder alkoxyliertes Harz POS, das Siloxylgruppierungen T und gegebenenfalls M und/oder D und/oder Q oder auch noch Gruppierungen Q und M und/oder D und/oder T umfasst;

→ und dass dieser Aktivator (B), wenn er Silicium umfasst, Träger mindestens einer Fa ist, die direkt oder auch nicht an ein Siliciumatom gebunden ist.

**6.** Dispersion nach Anspruch 5, **dadurch gekennzeichnet, dass** der Aktivator (B) ein Harz ist, das aus denen des Typs $T(OR^b)$, $DT(OR^b)$, $DQ(OR^b)$, $MT(OR^b)$, $MQ(OR^b)$, $MDT(OR^b)$, $MDQ(OR^b)$ oder Gemischen dieser ausgewählt ist, wobei $R^b$ = H oder eine Kohlenwasserstoffgruppierung ist.

**7.** Dispersion nach einem der Ansprüche 1 bis 6, **dadurch gekennzeichnet, dass** das Co-Vernetzungsmittel (D) unter Alkyltrialkoxysilanen der Formel $R^oSi(OR^d)_3$, worin R° = ein Kohlenwasserstoffrest, vorzugsweise Alkyl und noch bevorzugter Alkyl mit $C_1$-$C_{30}$; $R^d$ = Alkyl, vorzugsweise Alkyl mit $C_1$-$C_{20}$ und noch bevorzugter Methyl oder Ethyl, oder unter den Hydrolyseprodukten dieser Alkyltrialkoxysilane ausgewählt ist.

**8.** Dispersion nach einem der Ansprüche 1 bis 7, **dadurch gekennzeichnet, dass** sie außer Wasser die folgenden Bestandteile in den nachfolgend angegebenen Verhältnismengen,

- ☐ in Gewichtsteilen ☐, enthält:
- ☐ 100 ☐ A - flüssiges POS-Harz des Typs MDT(OH) und/oder DT(OH);
- ☐ 0,2 bis 5, vorzugsweise 0,3 bis 3 ☐ B - Siloxanaktivator M(OH) und/oder MD(OH) und/oder T(OH) und/oder DT(OH) und/oder MDT (OH) und/oder MT(OH);
- ☐ 0,01 bis 4, vorzugsweise 0,1 bis 1 ☐ C - Katalysator, vorzugsweise Dialkylzinndicarboxylat;
- ☐ 2 bis 20, vorzugsweise 10 bis 15 ☐ D - Co-Vernetzungsmittel, vorzugsweise Alkyltrialkoxysilan,
- ☐ 0,1 bis 15, vorzugsweise 2 bis 10 ☐ E - Tensid, ausgewählt vorzugsweise aus nicht-ionischen, noch bevorzugter aus Polyvinylalkoholen und/oder alkoxylierten Fettalkoholen.

**9.** Wässrige Silikondispersion, die insbesondere bei der Formulierung von Anstrichmitteln verwendbar ist, **dadurch gekennzeichnet, dass** die Tröpfchen der Silikonphase dieser Dispersion ein Silikonharz (A') umfassen, das durch Kondensation der Gruppierungen OH/OH vernetzt ist; wobei dieses Harz (A') einen Silanolgehalt umfasst, der weniger als 90% der Silanole darstellt, die ursprünglich im POS-Harz A vorliegen.

**10.** Dispersion nach Anspruch 9, **dadurch gekennzeichnet, dass** sie ausgehend von der Dispersion nach einem der Ansprüche 1 bis 8 erhalten wird.

**11.** Wässrige Formulierung, die insbesondere als Anstrichmittel oder Analoga oder Abdichtungsmaterial oder Baumaterial verwendbar ist, **dadurch gekennzeichnet, dass** sie außer Wasser enthält:

- Δ I Δ Silikondispersion nach einem der Ansprüche 1 bis 10;
- Δ II Δ einen siliciumhaltigen oder nicht-siliciumhaltigen Füllstoff, der vorzugsweise unter folgenden Produkten ausgewählt ist: ausgefälltes oder nicht-ausgefälltes Siliciumdioxid, kolloidales oder pulverförmiges Siliciumdioxid, Carbonate, Talk, $TiO_2$ und deren Gemische;
- Δ III Δ gegebenenfalls eine organische Dispersion oder mehrere organische Dispersionen, vorzugsweise ausgewählt aus denen, die (Co)-Polymere von (Meth)acrylsäure und/oder Essigsäure umfassen;
- Δ IV Δ gegebenenfalls ein Verdickungsmittel oder mehrere Verdickungsmittel, vorzugsweise ausgewählt unter Celluloseverdickungsmitteln, Acrylverdickungsmitteln, Polyurethan, natürlichen Gummis und ihren Gemischen;
- Δ V Δ gegebenenfalls ein Koaleszenzmittel oder mehrere Koaleszenzmittel, vorzugsweise ausgewählt aus organischen Lösungsmitteln und noch bevorzugter aus Glykolen und/oder aliphatischen Erdölverschnitten;
- Δ VI Δ gegebenenfalls ein Benetzungmittel oder mehrere Benetzungsmittel, ein Dispergiermittel oder mehrere Dispergiermittel, vorzugsweise aus Phosphaten und/oder Polyacrylverbindungen ausgewählt;
- Δ VII Δ gegebenenfalls ein Tensid oder mehrere Tenside;
- Δ VIII Δ gegebenenfalls ein Neutralisierungsmittel oder mehrere Neutralisierungsmittel;
- Δ IX Δ gegebenenfalls ein Biocid oder mehrere Biocide;
- Δ X Δ gegebenenfalls ein Verdünnungsmittel oder mehrere Verdünnungsmittel;
- Δ XI Δ gegebenenfalls einen Weichmacher oder mehrere Weichmacher, vorzugsweise ausgewählt unter nichtreaktiven Silikonölen;
- Δ XII Δ gegebenenfalls ein Antischaummittel oder mehrere Antischaummittel;
- Δ XIII Δ gegebenenfalls ein Pigment oder mehrere Pigmente oder ein Färbemittel oder mehrere Färbemittel (organisch oder mineralisch).

**12.** Verfahren zur Herstellung einer wässrigen Silikondispersion, die insbesondere zur Formulierung von Anstrichmitteln verwendbar ist, **dadurch gekennzeichnet, dass** es die folgenden essentiellen Stufen umfasst, die aufeinanderfolgend oder nicht aufeinanderfolgend sind:

- 1 • Verwendung mindestens eines Polyorganosiloxanharzes (POS) A,

  → das kondensierbare Hydroxylsubstituenten trägt, die in einer Menge von mindestens 0,05 Gew.-%, bezogen auf A, vorhanden sind,
  → und das Siloxylgruppen D, T und gegebenenfalls M und/oder Q trägt, wobei die Siloxylgruppen T in einem Molverhältnis vorliegen, das zwischen 0,5 und 0,85, vorzugsweise zwischen 0,55 und 0,80 liegt, vorhanden sind,

  gegebenenfalls mit mindestens einer der folgenden Verbindungen:

  - B - mindestens einem basischen Aktivator, der vorzugsweise unter den folgenden Produkten ausgewählt wird: Ammoniak und/oder in Wasser lösliche Amine und/oder Silane und/oder Oligo- oder Polysiloxane, die pro Molekül mindestens ein Hydroxyl und mindestens eine Aktivierungsfunktion Fa tragen, sowie unter den Gemischen dieser Produkte,
    mit der Maßgabe, dass man den Aktivator B nicht verwendet, wenn und nur wenn die Funktionen Fa, die durch die anderen verwendeten Bestandteile getragen werden, insbesondere die, die von A oder D getragen werden, in ausreichender Menge vorhanden sind;
  - D - mindestens einem Co-Vernetzungsmittel des Silanund/oder Siloxan-Typs, die mindestens zwei Funktionen -$OR^d$ ($R^d$ = H oder eine aliphatische Kohlenwasserstoffgruppierung vorzugsweise mit $C_1$-$C_{20}$) pro Molekül tragen;
    wobei das Co-Vernetzungsmittel gegebenenfalls durch mindestens eine Aktivierungsfunktion Fa pro Molekül substituiert ist,
  - C - mindestens einem Kondensationskatalysator C, der vorzugsweise unter metallorganischen Verbindungen und bevorzugter unter Dialkylzinndicarboxylaten ausgewählt wird;

- 2 • Herstellen einer Emulsion aus dem in Stufe 1 erhaltenen Gemisch mit Wasser und in Gegenwart mindestens eines Tensids E;
- 3 • eventuelles Nacheinmischen der gesamten oder eines restlichen Teils mindestens einer der Verbindungen A, B, C und D in die in Stufe 2 hergestellte Emulsion;
- 4 • eventuelles Reifen der Dispersion, die in Stufe 3 erhalten wurde, derart, dass eine Vernetzung durch Kondensation und in Emulsion des Harzes im Inneren der Tröpfchen der dispergierten Silikonphase unter Erhalt einer Dispersion,erfolgt, deren Tröpfchen der heterogenen Phase ein vernetztes Silikonharz A' enthalten, das umfasst:

  ◊ einen Gehalt an Silanol, der mindestens 90% der Silanole darstellt, die anfangs im Harz POS A vorliegen,
  ◊ sowie die Siloxylgruppen T und gegebenenfalls M und/oder D und/oder Q, wobei die Gruppen T in einem Molverhältnis vorliegen, das zwischen 0,5 und 0,85, vorzugsweise zwischen 0,55 und 0,80 liegt.

**13.** Herstellungsverfahren nach Anspruch 12, **dadurch gekennzeichnet, dass** die Verbindungen A bis E, die verwendet werden, den qualitativen und quantitativen Charakteristika entsprechen, die in den Ansprüchen 1 bis 10 definiert sind.

**14.** Verfahren zur Herstellung einer wässrigen Formuli erung, die insbesondere als Anstrichmittel oder Analoga oder Dichtungsmaterial oder Baumaterial verwendbar ist, **dadurch gekennzeichnet, dass** es im wesentlichen darin besteht, die Dispersion nach einem der Ansprüche 1 bis 10 und/oder die, die durch Durchführung des Verfahrens nach einem der Ansprüche 12 und 13 erhalten wird, mit:

⊕ einem siliciumartigen Füllstoff oder nichtsiliciumartigen Füllstoff, vorzugsweise ausgewählt unter den folgenden Produkten: ausgefälltes Silicumdioxid oder nicht-ausgefälltes Siliciumdioxid, kolloidales Siliciumdioxid oder pulverförmiges Silicumdioxid, Carbonaten, Talk, $TiO_2$ und ihren Gemischen;
⊕ und mindestens einer der nachfolgend aufgezählten Verbindungen:

  Δ III Δ einer oder mehreren organischen Dispersionen, vorzugsweise ausgewählt unter denen, die (Co) polymere von (Meth)acrylsäure und/oder Essigsäure umfassen;

Δ IV Δ einem Verdickungsmittel oder mehreren Verdickungsmitteln, vorzugsweise ausgewählt aus Celluloseverdickungsmitteln, Acrylverdickungsmitteln, Polyurethanen, natürlichen Gummis und deren Gemischen;
Δ V Δ einem Koaleszenzmittel oder mehreren Koaleszenzmitteln, vorzugsweise ausgewählt unter organischen Lösungsmitteln und noch bevorzugter unter Glykolen und/oder aliphatischen Erdölschnitten;
Δ VI Δ einem Benetzungsmittel oder mehreren Benetzungsmitteln, einem Dispergierungsmittel oder mehreren Dispergierungsmitteln, vorzugsweise ausgewählt unter Phosphaten und/oder Polyacrylverbindungen;
Δ VII Δ einem Tensid oder mehreren Tensiden;
Δ VIII Δ einem Neutralisierungsmittel oder mehreren Neutralisierungsmitteln;
Δ IX Δ einem Biocid oder mehreren Biociden;
Δ X Δ einem Verdünnungsmittel oder mehreren Verdünnungsmitteln;
Δ XI Δ einem Weichmacher oder mehreren Weichmachern, vorzugsweise ausgewählt unter nicht-reaktiven Silikonölen;
Δ XII Δ einem oder mehreren Antischaummitteln;
Δ XIII Δ einem oder mehreren Pigmenten oder einem oder mehreren Färbemitteln (organisch oder mineralisch)

zu vermischen.

**15.** Anstrichmittel, **dadurch gekennzeichnet, dass** es umfasst:

- die Dispersion nach einem der Ansprüche 1 bis 10 oder die Dispersion, die durch Durchführung des Verfahrens nach Anspruch 12 oder 13 erhalten wird,
- und/oder die Formulierung nach Anspruch 11 oder die Formulierung, die durch Durchführung des Verfahrens nach Anspruch 14 erhalten wird.

## Claims

**1.** Aqueous silicone dispersion, that can be used especially in the formulation of paints, **characterized:**

◊ in that the droplets of non-aqueous phase of this dispersion are obtained from at least one liquid polyorganosiloxane (POS) resin A having as characteristics, before emulsification:

→ of carrying condensable hydroxyl substituents present in an amount of at least 0.05% by weight;
→ and comprising siloxyl units D, T and possibly M and/or Q, the siloxyl units T being present in a molar ratio $\frac{T}{M + D + T + Q}$ of between 0.5 and 0.85, preferably between 0.55 and 0.80;

◊ and in that the composition of its non-aqueous phase is the following, □ in parts by weight □

□ 100 □ **A** - one or more liquid POS resins of the type of that defined above and optionally substituted with at least one activation functional group **Fa** for the *in situ* crosslinking of the resin **A**;

□ 0 to 20 □ **B** - at least one activator for the in si tu crosslinking of the resin A, this activator being basic, water-soluble and preferably chosen:

Δ from water-soluble or water-dispersible amines
Δ and/or from products obtained from silanes and/or oligosiloxanes or polysiloxanes carrying, per molecule and before emulsification, at least one hydroxyl and at least one activation functional group Fa,
Δ and from mixtures of these products,

*with the condition whereby* the composition contains no activator **B** if and only if the functional groups **Fa** carried by other components of the composition, in particular those carried by A and/or by **D**, are present in sufficient amount;

□ > 0 □ **C** - at least one condensation catalyst selected preferably from organometallic compounds and more preferably still from dialkyltin dicarboxylates;

□ 0 to 30 □ **D -** at least one cocrosslinking agent, preferably selected from the products obtained from

silanes and/or from siloxanes initially carrying at least two functional groups $-OR^d$ ($R^d$ = H or aliphatic hydrocarbon, preferably $C_1$-$C_{20}$) group per moleoule,
this cocrosslinking agent D being optionally substituted with at least one activation functional group **Fa** per molecule;

□0.01 to 10 □ **E -** at least one surfactant.

2. Dispersion according to Claim 1, **characterized by** a VOC (volatile organic compound) content of less than or equal to 15%, preferably less than or equal to 10% and even more preferably less than or equal to 5%, these per cent being per cent by weight relative to the non-aqueous phase of the emulsion.

3. Dispersion according to Claim 2, **characterized in that** the hydroxylated resin **A** also includes alkoxyl groups $-OR^a$ in which $R^a$ = hydrocarbon, preferably $C_1$-$C_{20}$, and even more preferably $C_1$-$C_{10}$, group.

4. Dispersion according to any one of Claims 1 to 3, **characterized in that** Δ the resin (**A**) is liquid at room temperature, this state being manifested by a viscosity $\eta_r$ at 25°C of between 50 and 200 000 mPa.s, preferably between 200 and 20 000 mPa.s;
Δ this resin (**A**) is furthermore selected from those of the T($OR^a$), DT($OR^a$), MDQ($OR^a$), MT($OR^a$), MQ($OR^a$), MDT ($OR^a$) type or mixtures of the latter, the DT($OR^a$) and/or MDT($OR^a$) resins being particularly preferred.

5. Dispersion according to any one of Claims 1 to 4, **characterized**

→ **in that** the activator **B** is:

- aqueous ammonia
- and/or a water-soluble amine, preferably a primary or secondary amine;
- and/or a hydroxylated or alkoxylated silane,
- and/or a linear, hydroxylated or alkoxylated polydiorganosiloxane with D and/or MD siloxyl units;
- and/or a hydroxylated or alkoxylated POS resin comprising T, and optionally M and/or D and/or Q, siloxyl units, or else Q and M and/or D and/or T units;

→ and in that this activator (**B**) , if it includes silicon, carries at least one Fa that is linked directly or indirectly to a silicon atom.

6. Dispersion according to Claim 5, **characterized in that** the activator (**B**) is a resin selected from those of the T ($OR^b$), DT$(OR)^b$, DQ$(OR)^b$, MT$(OR)^b$, MQ$(OR)^b$, MDT$(OR)^b$, MDQ$(OR)^b$ type or mixtures of the latter, with $R^b$ = H or hydrocarbon group.

7. Dispersion according to any one of Claims 1 to 6, **characterized in that** the cocrosslinking agent (D) is chosen from alkyltrialkoxysilanes of formula $R^\circ Si(OR^d)_3$ in which R° = hydrocarbon, preferably alkyl, and even more preferably $C_1$-$C_{30}$ alkyl , radical; $R^d$ = alkyl, preferably $C_1$-$C_{20}$ alkyl, and even more preferably methyl or ethyl, or from products resulting from the hydrolysis of these alkyltrialkoxysilanes.

8. Dispersion according to any one of Claims 1 to 7, **characterized in that**, apart from water, it comprises the following components in the proportions given below, □in parts by weight □

□ 100 □**A -** liquid POS resin of the MDT(OH) and/or DT(OH) type;
□ 0.2 to 5, preferably 0.3 to 3 □**B** - M(OH) and/or MD (OH) and/or T (OH) and/or DT (OH) and/or MDT (OH) and/or MT(OH) siloxane activator;
□ 0.01 to 4, preferably 0.1 to 1 □C - catalyst, preferably a dialkyltin dicarboxylate;
□ 2 to 20, preferably 10 to 15 □**D** -cocrosslinking agent, preferably an alkyltrialkoxysilane,
□ 0.1 to 15, preferably 2 to 10 □**E** - surfactant preferably chosen from nonionic surfactants and more preferably still from polyvinyl alcohols and/or alkoxylated fatty alcohols.

9. Aqueous silicone dispersion, that can be used especially in the formulation of paints, **characterized in that** the droplets of silicone phase of this dispersion comprise a silicone resin (**A'**) crosslinked by condensation of OH/OH groups, this resin (**A'**) having a silanol content representing less than 90% of the silanols initially present in the POS resin **A**.

**10.** Dispersion according to Claim 9, **characterized in that** it is obtained from the dispersion according to any one of Claims 1 to 8.

**11.** Aqueous formulation, that can be used especially as a paint or the like, or as a sealing or building material, **characterized in that**, apart from water, it contains:

- Δ I Δ of the silicone dispersion according to any one of Claims 1 to 10;
- Δ II Δ a silicious or non-silicious filler, preferably selected from the following products: precipitated or non-precipitated silica, colloidal silica or silica in powder form, carbonates, talc, $TiO_2$ and mixtures thereof;

    - Δ III Δ optionally one or more organic dispersions, preferably chosen from those comprising (meth)acrylic acid and/or acetic acid (co) polymers;
    - Δ IV Δ optionally one or more thickeners preferably chosen from cellulosic and acrylic thickeners, polyurethane, natural gums and mixtures thereof;
    - Δ V Δ optionally, one or more coalescants preferably chosen from organic solvents and more preferably still from glycols and/or aliphatic petroleum cuts;
    - Δ VI Δ optionally, one or more dispersants or wetting agents, preferably chosen from phosphates and/or polyacrylics;
    - Δ VII Δ optionally, one or more tension agents;
    - Δ VIII Δ optionally, one or more neutralizing agents;
    - Δ IX Δ optionally, one or more biocides;
    - Δ X Δ optionally, one or more diluents;
    - Δ XI Δ optionally, one or more plasticizers, preferably chosen from nonreactive silicone oils;
    - Δ XII Δ optionally, one or more antifoams;
    - Δ XIII Δ optionally, one or more pigments or dyes (these being organic or mineral).

**12.** Method of preparing an aqueous silicone dispersion, that can be used especially in the formulation of paints, **characterized in that** it comprises the following essential, successive or non-successive steps:

- 1 • Use of at least one polyorganosiloxane (POS) resin **A**,

    → carrying condensable hydroxyl substituents present in an amount of at least 0.05% by weight relative to **A;**
    → and comprising siloxyl units D, T and possibly M and/or Q, the siloxyl units T being present in a molar ratio of between 0.5 and 0.85, preferably between 0.55 and 0.80;

  optionally with at least one of the following compounds:

    - **B** - at least one basic activator, preferably chosen from the following products: aqueous ammonia and/or amines soluble in water and/or silanes and/or oligosiloxanes or polysiloxanes carrying, per molecule, at least one hydroxyl group and at least one activation functional group **Fa,** and also from mixtures of these products; with the condition whereby the activator **B** is used if and only if the functional groups **Fa** carried by the other components used, in particular those carried by A or by D, are present in sufficient amount;
    - **D** - at least one cocrosslinking agent of the silane and/or siloxane type, carrying at least two functional groups $-OR^d$ ($R^d$ = H or aliphatic hydrocarbon, preferably $C_1$-$C_{20}$ group), per molecule;
      the cocrosslinking agent being optionally substituted with at least one activation functional group **Fa** per molecule,
    - **C** - at least one condensation catalyst **C** preferably selected from organometallic compounds and even more preferably from dialkyltin dicarboxylates;

- 2 • Emulsification of the mixture obtained in step 1 with water and in the presence of at least one surfactant **E**;
- 3 • optional postmixing with the emulsion prepared in step 2 of all or a residual part of at least one of compounds **A, B, C** and **D**;
- 4 • optional maturing of the dispersion resulting from step 3, so that crosslinking by condensation and in emulsion of the resin takes place within the droplets of the dispersed silicone phase, so as in the end to obtain a dispersion in which the droplets of heterogeneous phase contain a crosslinked silicone resin **A'** comprising:

    ◊ a silanol content representing less than 90% of the silanols initially present in the POS resin A,
    ◊ and siloxyl units T and optionally M and/or D and/or Q, the units T being present in a molar ratio of between

0.5 and 0.85, preferably between 0.55 and 0.80.

**13.** Method of preparation according to Claim 12, **characterized in that** compounds A to E employed comply with the qualitative and quantitative characteristics as defined in Claims 1 to 10.

**14.** Method of preparing an aqueous formulation, that can be used especially as a paint or the like or as a sealing or building material, **characterized in that** it essentially consists in mixing the dispersion according to any one of Claims 1 to 10 and/or the dispersion obtained by implementing the method according to either of Claims 12 to 13 with:

⊕ a silicious or non-silicious filler, preferably selected from the following products: precipitated or non-precipitated silica, colloidal silica or silica in powder form, carbonates, talc, $TiO_2$ and mixtures thereof; and

⊕ at least one of the compounds listed below:

  Δ III Δ one or more organic dispersions, preferably chosen from those comprising (meth)acrylic acid and/or acetic acid (co)polymers;
  Δ IV Δ one or more thickeners preferably chosen from cellulosic and acrylic thickeners, polyurethanes, natural gums and mixtures thereof;
  Δ V Δ one or more coalescants preferably chosen from organic solvents and more preferably still from glycols and/or aliphatic petroleum cuts;
  Δ VI Δ one or more dispersants or wetting agents, preferably chosen from phosphates and/or polyacrylics;
  Δ VII Δ one or more tension agents;
  Δ VIII Δ one or more neutralizing agents;
  Δ IX Δ one or more biocides;
  Δ X Δ one or more diluents;
  Δ XI Δ one or more plasticizers, preferably chosen from nonreactive silicone oils;
  Δ XII Δ one or more antifoams;
  Δ XIII Δ one or more pigments or dyes (these being organic or mineral).

**15.** Paint, **characterized in that** it comprises:

- some of the dispersion according to any one of Claims 1 to 10 or of the dispersion obtained by implementing the method according to Claim 12 or 13 and/or
- some of the formulation according to Claim 11 or of the formulation obtained by implementing the method according to Claim 14.